# EUROPEAN PATENT SPECIFICATION

(11) **EP 3 723 344 B1**
(45) Date of publication and mention of the grant of the patent: **28.10.2026**
(21) Application number: 18896805.1
(22) Date of filing: 22.12.2018
(51) Int. Cl.: H04J 3/14, H04J 3/16, H04L 12/437

(54) **FAULT INDICATION METHOD AND DEVICE IN FLEXIBLE ETHERNET**
VERFAHREN UND VORRICHTUNG ZUR FEHLERANZEIGE IN EINEM FLEXIBLEN ETHERNET
PROCÉDÉ ET DISPOSITIF D'INDICATION DE DÉFAILLANCE DANS UN ETHERNET FLEXIBLE

(30) Priority: 26.12.2017 CN 201711437572
(43) Date of publication of application: 14.10.2020
(73) Proprietor: HUAWEI TECHNOLOGIES CO., LTD., Shenzhen, Guangdong 518129 (CN)
(72) Inventor: ZHANG, Xiaojun, Shenzhen, Guangdong 518129 (CN); CHEN, Qichang, Shenzhen, Guangdong 518129 (CN); NIU, Lehong, Shenzhen, Guangdong 518129 (CN)
(74) Representative: Gill Jennings & Every LLP
(86) International application number: PCT/CN2018/122933
(87) International publication number: WO 2019/128887

(56) References cited:
- CN-A- 106 612 220
- US-A1- 2017 005 901

## Description

### TECHNICAL FIELD

The present disclosure relates to the communications field, and in particular, to a method and an apparatus for indicating a fault in flexible Ethernet.

### BACKGROUND

The standards organization optical internetworking forum (optical internet forum, OIF) publishes a flexible Ethernet (Flex Ethernet, FlexE for short) 1.0 implementation protocol based on a 100 G Ethernet standard, and provides functions such as rate aggregation, sub-rating, and channelization based on time division multiplexing (time division multiplexing, TDM) of an Ethernet service.

The rate aggregation of the FlexE supports a plurality of low-rate physical interfaces in jointly carrying a high-speed Ethernet service data flow, and the sub-rating and the channelization allow that one Ethernet physical interface concurrently carries a plurality of low-rate data flows. A large quantity of network devices supporting an Ethernet physical interface are deployed on an access network and a metropolitan area network of a live network, a FlexE interface is compatible with a standard Ethernet and extends functions and flexibility of the Ethernet, thereby having a great market application prospect and development space in a deterministic low-latency, high-bandwidth scenario, such as fifth generation mobile communications (5th-Generation, 5G) fronthaul and backhaul networks and data center interconnection.

In the FlexE, slots are divided through TDM, to implement hard isolation of bandwidth of a transmission channel. One service data flow may be allocated to one or more slots, to match services at various rates. A flexible Ethernet group (FlexE Group) may include one or more physical link interfaces, and a slot allocation table corresponding to the FlexE group is referred to as a FlexE calendar (FlexE calendar). A slot mapping table corresponding to a single physical link is referred to as a FlexE sub-calendar (sub-calendar).

The FlexE calendar includes one or more sub-calendars. Each sub-calendar indicates how 20 slots are allocated to a corresponding flexible Ethernet client (FlexE Client). The FlexE client represents a client data flow that is transmitted in a specified slot (one or more slots) on the FlexE group, and one FlexE group may carry a plurality of FlexE clients.

When a link in a FlexE group and carrying data of a FlexE client is faulty, an Ethernet local fault (Local fault, LF) signal needs to be sent in a downstream direction of each FlexE client that is carried on the FlexE group. After a fault occurs in a FlexE group, an LF signal is continuously sent to each FlexE client carried on the faulty FlexE group, and the continuously transmitted LF signal occupies all bandwidth of downstream transmission paths of these FlexE clients.

In the prior art, US2017/005901A1 relates to a node configured to support a Flexible Ethernet (FlexE) client service in a network including circuitry configured to receive a FlexE client, a circuitry configured to at least one of monitor and update one or more Operations, Administration, and Maintenance (OAM) fields in FlexE overhead, wherein the OAM fields cover a single client path along many network segments (sections) for the FlexE client.

### SUMMARY

The invention is defined in the independent claims.
Further specific technical features have been defined in the dependent claims.

Based on the principles disclosed in the present disclosure, when a fault occurs in a physical layer entity, a fault indication code block is sent to the flexible Ethernet client corresponding to the at least one physical layer entity in which the fault occurs. Compared to a technical solution in the prior art in which a local fault signal is continuously sent to each flexible Ethernet client carried on a flexible Ethernet group immediately after a fault occurs in a physical layer entity, in the technical solution provided in this implementation of the present disclosure, the fault indication code block is sent to the flexible Ethernet client corresponding to the at least one physical layer entity in which the fault occurs. Therefore, not all bandwidth of a downstream transmission path in the flexible Ethernet is occupied, and data transmission on a non-faulty channel in a same flexible Ethernet group is not affected, thereby reducing a quantity of affected flexible Ethernet clients.

### BRIEF DESCRIPTION OF DRAWINGS

FIG. 1 is a schematic application diagram of a signal transmission device in FlexE according to an implementation of the present disclosure;
FIG. 2 is a schematic structural diagram of a PE node according to an implementation of the present disclosure;
FIG. 3 is a schematic structural diagram of a P node according to an implementation of the present disclosure;
FIG. 4 is a schematic diagram of a FlexE group carrying a plurality of FlexE clients according to an implementation of the present disclosure;
FIG. 5 is a schematic diagram of mapping and multiplexing in FlexE based on Nx100 G PHYs in OIF FlexE 1.0 according to an implementation of the present disclosure;
FIG. 6 is a schematic diagram of de-mapping and de-multiplexing in FlexE based on Nx100 G PHYs in OIF FlexE 1.0 according to an implementation of the present disclosure;
FIG. 7 is a schematic diagram of mapping and multiplexing in FlexE based on Mx100 G PHYs in OIF FlexE 2.0 according to an implementation of the present disclosure;
FIG. 8 is a schematic diagram of mapping and multiplexing in FlexE based on Mx200 G PHYs in OIF FlexE 2.0 according to an implementation of the present disclosure;
FIG. 9 is a schematic diagram of mapping and multiplexing in FlexE based on Mx400 G PHYs in OIF FlexE 2.0 according to an implementation of the present disclosure;
FIG. 10 is a schematic diagram of slot allocation in a FlexE group including four physical interfaces according to an implementation of the present disclosure;
FIG. 11 is a flowchart of a method for indicating a fault according to an implementation of the present disclosure;
FIG. 12 is a schematic diagram of an idle code block according to an implementation of the present disclosure;
FIG. 13 is a schematic diagram of an example of an SLAI code block according to an implementation of the present disclosure;
FIG. 14 is a schematic diagram of another example of an SLAI code block according to an implementation of the present disclosure;
FIG. 15 is a schematic diagram of still another example of an SLAI code block according to an implementation of the present disclosure;
FIG. 16 is a flowchart of a method for indicating a fault according to an implementation of the present disclosure;
FIG. 17 is a schematic diagram of an LF code block according to an implementation of the present disclosure;
FIG. 18A to FIG. 18D are schematic diagrams of an example showing that a PHY fault occurs according to an implementation of the present disclosure;
FIG. 19A to FIG. 19D are schematic diagrams of detecting a PHY fault according to an implementation of the present disclosure;
FIG. 20A to FIG. 20D are schematic diagrams of sending an SLAI code block according to an implementation of the present disclosure;
FIG. 21A to FIG. 21D are schematic diagrams of sending an LF signal according to an implementation of the present disclosure;
FIG. 22A to FIG. 22D are schematic diagrams showing that a PHY fault disappears according to an implementation of the present disclosure;
FIG. 23 is a schematic structural diagram of an apparatus for indicating a fault according to an implementation of the present disclosure;
FIG. 24 is a schematic structural diagram of another apparatus for indicating a fault according to an implementation of the present disclosure; and
FIG. 25 is a schematic block diagram of a fault indication device according to an implementation of the present disclosure.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

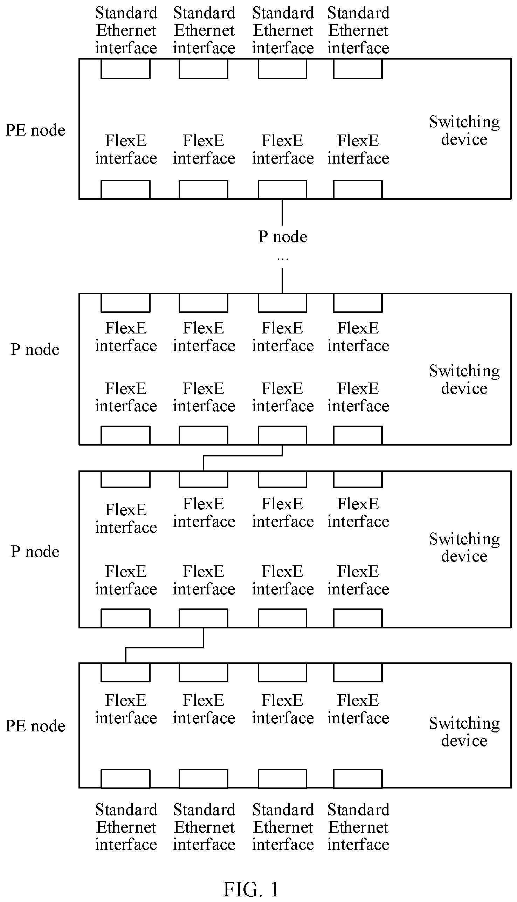

The technical solutions in implementations of the present disclosure are applied to a multi-node network that is based on a FlexE technology. FIG. 1 is a schematic application diagram of a signal transmission device in FlexE according to an implementation of the present disclosure.

FIG. 1 shows a network including a provider edge (provider edge, PE) node and a provider (provider, P) node. The PE node is a network device connected to a user at a network edge, and the PE node is equipped with a network-to-network interface (network to network interface, NNI) and a user-network interface (user networks interface, UNI). The P node is a network device in a network, and is equipped with only an NNI. Both the PE node and the P node may be referred to as switching devices or switch devices. The PE node in FIG. 1 is connected to customer equipment through a standard Ethernet interface, and P nodes are connected to each other through a FlexE interface.

However, the standard Ethernet interface herein is only an example. Alternatively, the PE node may be connected to a synchronous digital hierarchy (synchronous digital hierarchy, SDH) network through an SDH interface, connected to an optical transport network (optical transport network, OTN) network through an OTN interface, connected to a common public radio frequency interface (common public radio interface, CPRI) network through a CPRI, or connected to another user equipment through another user equipment interface.

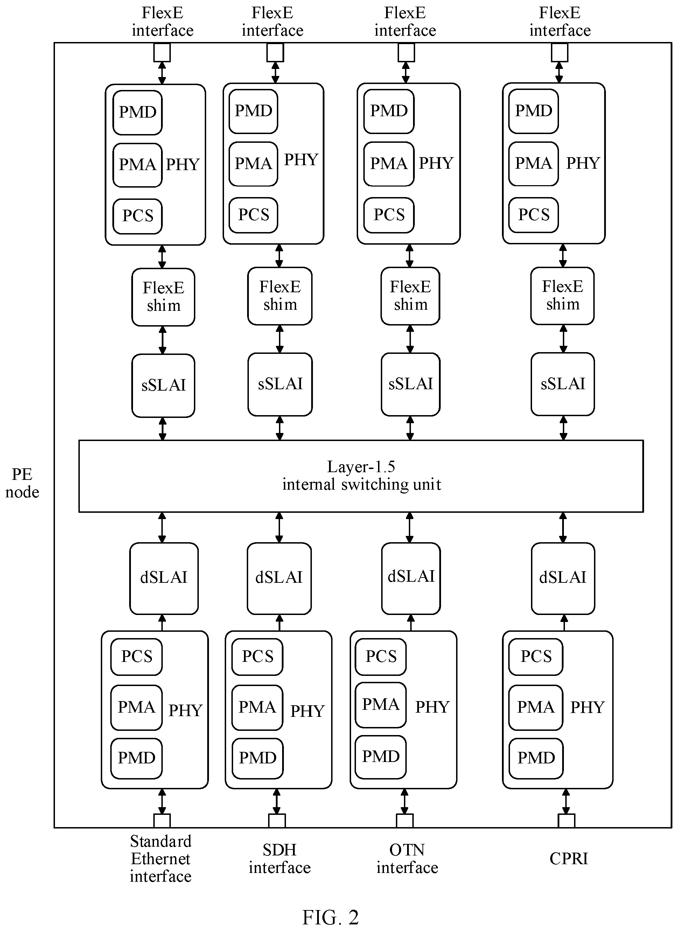

FIG. 2 is a schematic structural diagram of a PE node according to an implementation of the present disclosure. The PE node has a plurality of transmission paths from UNIs such as a standard Ethernet interface, an SDH interface, an OTN interface, and a CPRI to a FlexE interface. For simplicity, the following uses the standard Ethernet interface as an example for description. Devices in all transmission paths are the same. The standard Ethernet interface is connected to a physical layer entity (physical layer entities, PHY), and a detector-server layer alarm indication (detector-server layer alarm indication, dSLAI) is connected to both the PHY and a layer-1.5 internal switching unit. A service-server layer alarm indication (service-server layer alarm indication, sSLAI) is also connected to the layer-1.5 internal switching unit. The sSLAI is connected to the FlexE interface sequentially through a flexible Ethernet shim (FlexE Shim) and the PHY.

The sSLAI/dSLAI is responsible for generation and termination of a server layer alarm indication (server layer alarm indication, SLAI) code block in the FlexE network. The SLAI code block herein is an example of a fault indication code block, and the following uses the SLAI code block as an example for description.

In the PE node, when a signal is transmitted from the standard Ethernet interface to the FlexE interface, the sSLAI detects whether there is a PHY fault. When a signal is transmitted from the FlexE interface to the standard Ethernet interface, the dSLAI detects whether there is an SLAI code block in a received signal stream.

The PHY specifically includes a physical medium dependent (physical medium dependent, PMD) sublayer, a physical medium attachment (physical medium attachment, PMA) sublayer, and a physical coding sublayer (physical coding sublayer, PCS).

Layer 1.5 is a data transmission layer related to a FlexE protocol. The FlexE shim is responsible for mutual conversion from a standard Ethernet data flow to a FlexE slot data flow.

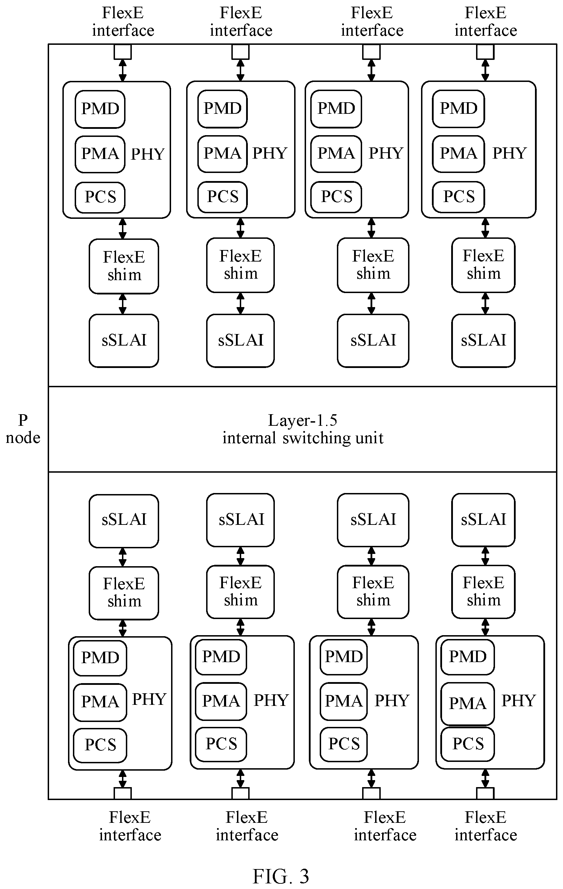

FIG. 3 is a schematic structural diagram of a P node according to an implementation of the present disclosure. The P node is equipped with only an NNI. A difference between the P node and the PE node lies in that the P node has two sSLAIs, and each sSLAI is connected to the PHY by using a FlexE shim.

The technical solutions in the implementations of the present disclosure may be implemented on a network device that supports layer-1.5 switching. Specifically, the network device is a switch device that supports the FlexE interface.

In terms of structure, the network device in the implementations of the present disclosure may be a box switch or a chassis switch. A dSLAI function may be added to a user-network interface chip of the network device, and an sSLAI function may be added to a network-to-network interface chip of the network device.

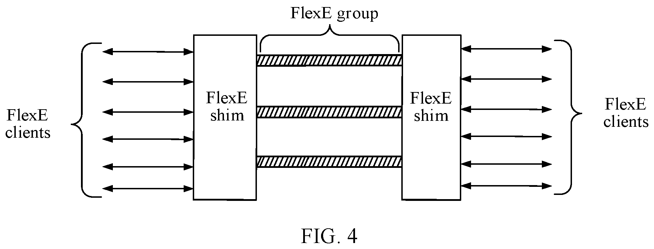

FIG. 4 is a schematic diagram of a FlexE group carrying a plurality of FlexE clients. One FlexE group carries a plurality of FlexE clients. That is, the FlexE shim multiplexes and maps a plurality of FlexE clients to one FlexE group. In addition, the FlexE shim may de-map and de-multiplex a FlexE group, to restore a plurality of FlexE clients from the FlexE group.

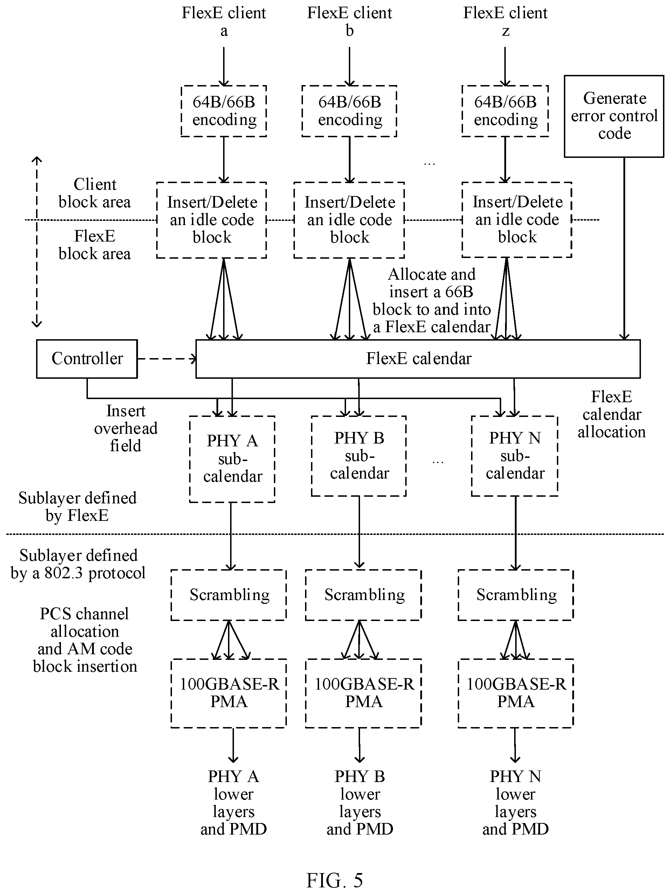

FIG. 5 is a schematic diagram of mapping and multiplexing in FlexE based on Nx100 G PHYs in OIF FlexE 1.0 according to an implementation of the present disclosure. As shown in FIG. 5, in a client block area, an idle code block (IDLE code block) is inserted/deleted from data that is of a FlexE client a to a FlexE client z and that includes 64 B/66 B encoded data, to implement clock synchronization in a FlexE block area. In addition, slot allocation is performed, by using a FlexE calendar corresponding to the FlexE group, on a data code block for which clock synchronization has been completed, and the data code block is transmitted by using each sub-calendar after an overhead (overhead) field is inserted by a control part. After being scrambled, a PCS channel is allocated to and an AM (alignment marker, alignment marker) code block is inserted into transmission data, and the transmission data is transmitted in a physical layer sequentially through a PMA and a PMD. When a PHY fault occurs, a fault control block is generated, and is transmitted downstream together with a transmission data signal.

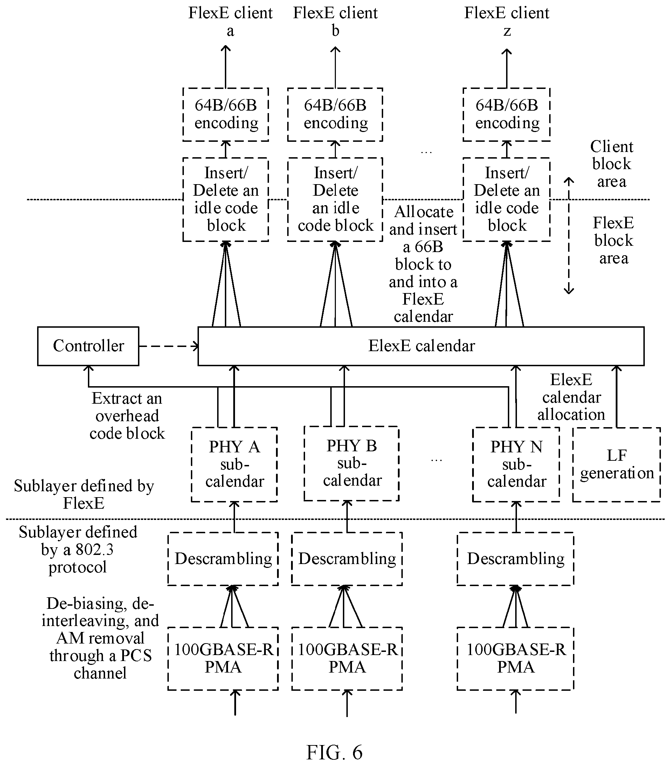

FIG. 6 is a schematic diagram of de-mapping and de-multiplexing in FlexE based on Nx100 G PHYs in OIF FlexE 1.0 according to an implementation of the present disclosure. A de-mapping and de-multiplexing process performed by the FlexE shim is basically in reverse order of a mapping and multiplexing process. The FlexE shim de-biases, de-interleaves, removes an AM code block from, and then de-scrambles input data through a PCS channel. De-scrambled transmission data from a PHY is transmitted by using each sub-calendar, overhead is extracted from the de-scrambled transmission data, and then each FlexE client is restored from a FlexE calendar. In this process, when a PHY fault occurs, a local fault (local fault, LF) signal is generated in a sublayer (sublayers) defined by the FlexE, to notify a downstream device and a device outside the network that the PHY fault exists.

After evolving from version 1.0 to version 2.0, the OIF FlexE specifies that a 100 G PHY carries one FlexE instance (Instance), a 200 G PHY carries two FlexE instances, and a 400 G PHY carries four FlexE instances.

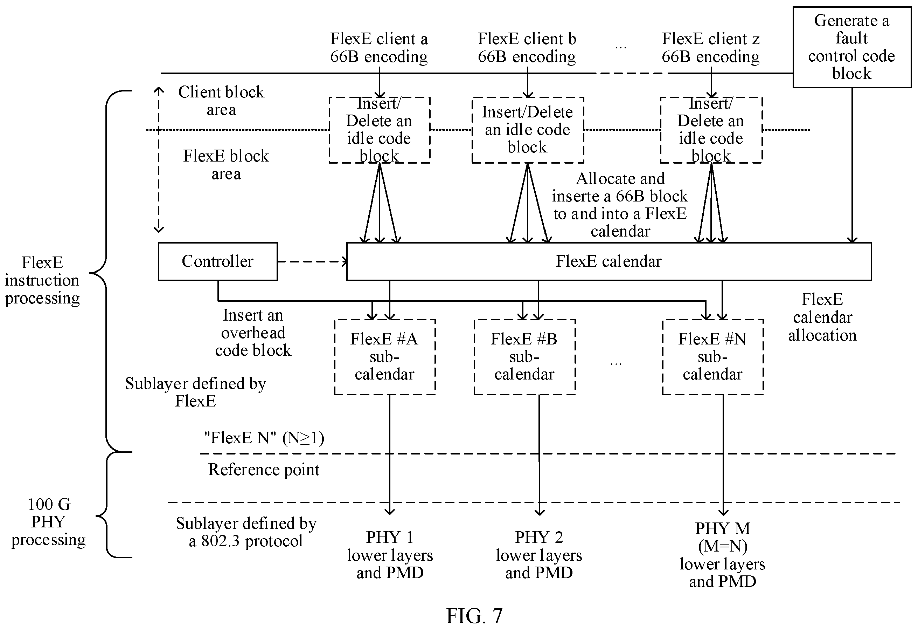

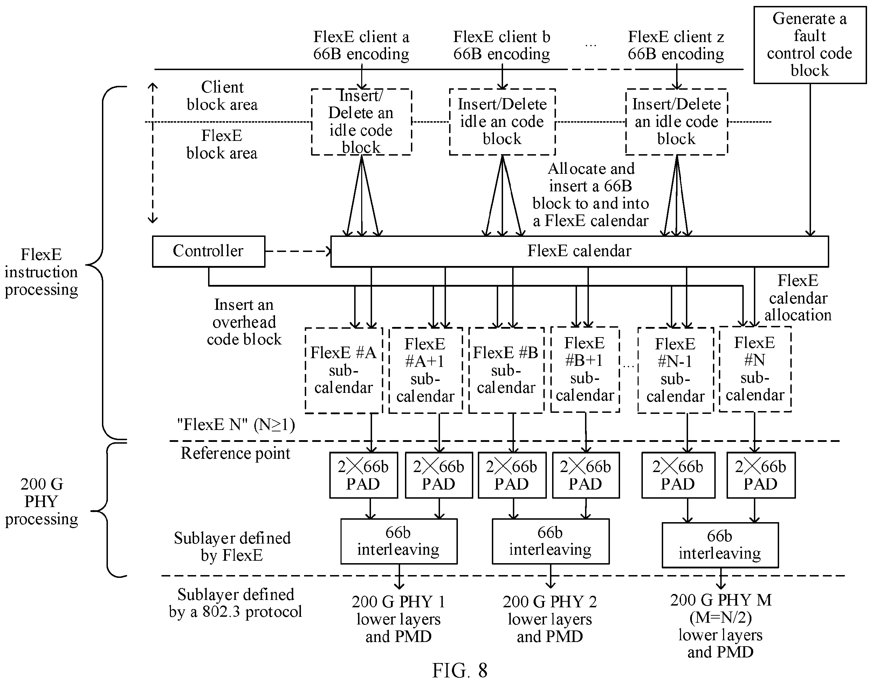

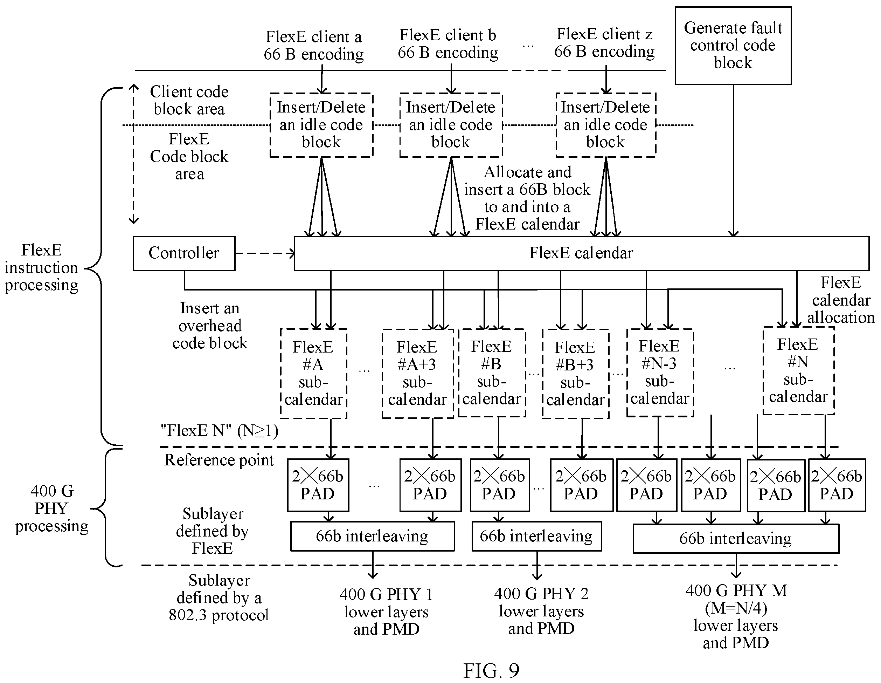

FIG. 7 is a schematic diagram of mapping and multiplexing in FlexE based on Mx100 G PHYs in OIF FlexE 2.0 according to an implementation of the present disclosure. FIG. 8 is a schematic diagram of mapping and multiplexing in FlexE based on Mx200 G PHYs in OIF FlexE 2.0 according to an implementation of the present disclosure. FIG. 9 is a schematic diagram of mapping and multiplexing in FlexE based on Mx400 G PHYs in OIF FlexE 2.0 according to an implementation of the present disclosure. Herein, in FIG. 7, M=N, and each 100 G PHY carries one FlexE instance. In FIG. 8, M=N/2, and each 200 G PHY carries two FlexE instances. For example, a 200 G PHY 1 carries FlexE #A and FlexE #A+1. In FIG. 9, M=N/4, and each 400 G PHY carries four FlexE instances. For example, a 400 G PHY 1 carries FlexE #A, FlexE #A+1, FlexE #A+2, and FlexE #A+3.

Using FIG. 8 as an example, a 200 G PHY carries two FlexE instances, namely, FlexE #A and FlexE #A+1. In FIG. 8, in a client block area, an idle code block is inserted/deleted from 66 B encoded data of FlexE clients a, ... , and z, to implement clock synchronization in a FlexE block area. The data code block on which clock synchronization has been performed is allocated to and inserted into a FlexE calendar, and FlexE #A, A+1, ... , N-1, and N are transmitted by using all sub-calendars. After two 66 B code blocks are separately inserted into transmission data of every two corresponding groups of instances, for example, FlexE #A and FlexE #A+1, the transmission data is interleaved, and is output by using a PHY of a 200 G PHY network.

De-mapping and de-multiplexing in the FlexE in OIF FlexE 2.0 are reversely performed relative to processes in FIG. 7 to FIG. 9, and details are not described herein again.

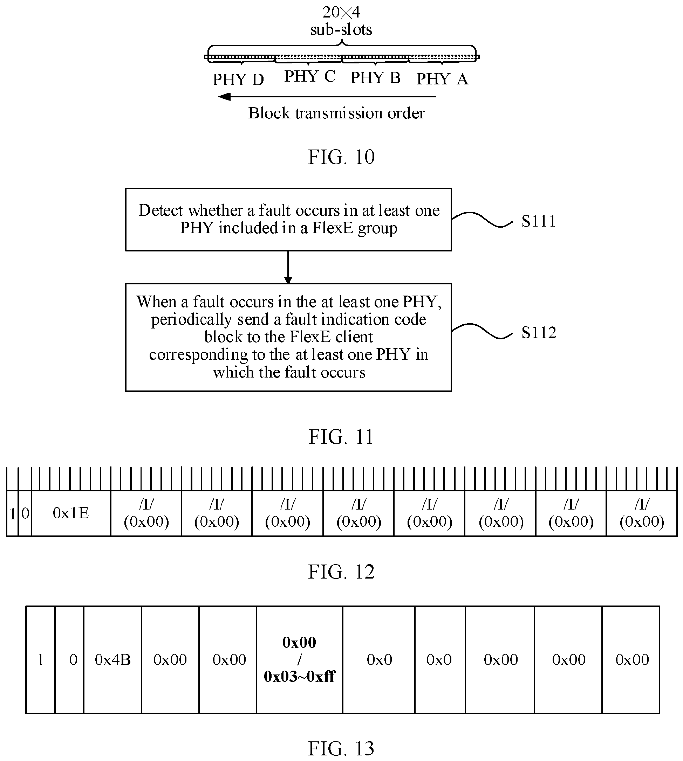

FIG. 10 is a schematic diagram of slot allocation in a FlexE group including four physical interfaces. Each physical interface has 20 sub-slots (sub-calendar), and therefore the FlexE group has 20×4 sub-slots.

According to an OIF FlexE protocol standard, one FlexE group sends one FlexE overhead code block to a remote PHY every 20×1023 code blocks on each member PHY (1.0 standard) or instance (2.0). Eight FlexE overhead code blocks that are sequentially sent form one overhead frame (FlexE overhead frame), and thirty-two consecutive FlexE overhead frames form one multiframe (multiframe). The FlexE specifies that some fields of the overhead frame carry a slot allocation table, and the slot table is synchronized to the remote PHY by using the FlexE overhead frame, to ensure that both PHYs receive and send a FlexE client data flow by using a same slot allocation table.

Based on the foregoing descriptions, the FlexE group includes a FlexE client, a FlexE shim (FlexE Calendar), a PHY (OIF FlexE 1.0)/instance (OIF FlexE 2.0), and a link connection between PHYs. When a PHY fault occurs in a FlexE group that carries FlexE client data, a fault indication code block needs to be transmitted to notify a downstream device and an external device.

The following describes technical solutions in the implementations of the present disclosure in detail with reference to the accompanying drawings. FIG. 11 is a flowchart of a method for indicating a fault according to an implementation of the present disclosure. The method is applied to FlexE, and specifically includes the following steps.

S111. Detect whether a fault occurs in at least one PHY included in a FlexE group.

A P node or a PE node in the FlexE network detects whether a PHY fault occurs in a FlexE group that transmits a signal. In a specific example, the P node or the PE node in the FlexE network may detect, by using an sSLAI, whether a PHY fault occurs in the FlexE group that transmits a signal.

The sSLAI determines that a PHY fault occurs when detecting any one of the following: A PHY loses a signal (loss of signal, LOS), a PHY fails to lock a code block (loss of block lock), a PHY fails to lock an alignment code block (loss of alignment marker lock), or a high bit error rate alarm signal is detected in a PHY.

S112. When a fault occurs in the at least one PHY, periodically send a fault indication code block to a FlexE client corresponding to the at least one PHY in which the fault occurs.

The PHY herein may be a PHY in OIF FlexE 1.0, or may be a PHY or a FlexE instance (FlexE Instance) corresponding to a PHY in OIF FlexE 2.0. The FlexE client corresponding to the PHY in which the fault occurs is a FlexE client in a downstream direction of signal transmission by the PHY in which the fault occurs.

Herein, an example in which the sSLAI sends an SLAI code block as the fault indication code block is used for description.

In the foregoing method, when a PHY fault occurs, for example, the sSLAI periodically sends an SLAI code block to the FlexE client corresponding to the at least one PHY that is carried on the FlexE group and in which the fault occurs. In the method, data transmission carried on a non-faulty channel of a same FlexE group is not affected, thereby reducing a quantity of affected FlexE clients. In addition, a plurality of paths of different signals are transmitted on channels of a same FlexE group without interfering with each other. Therefore, utilization of a communications line may be improved, and a capability of statistical multiplexing is provided for a downstream transmission path of an associated FlexE client channel of a same FlexE group in which a fault occurs. Moreover, because transmission of a data flow on a FlexE client channel carried by a non-faulty PHY in a FlexE group is not limited, a possibility of a protection switchover mechanism between a plurality of PHYs in the FlexE group is provided, and a fault self-healing mechanism at a FlexE group level is allowed.

The periodically sending, by the sSLAI, an SLAI code block to a FlexE client corresponding to the at least one PHY in which the fault occurs includes: sending multiple idle code blocks between such SLAI code blocks in adjacent periods. Alternatively, the sSLAI periodically sends an SLAI code block to a FlexE client corresponding to the at least one PHY in which the fault occurs, where when the fault is detected, first, a plurality of SLAI code blocks are consecutively sent to the FlexE client corresponding to the at least one PHY in which the fault occurs, then an SLAI code block is periodically sent to the FlexE client corresponding to the at least one PHY in which the fault occurs, and multiple idle code blocks are sent between such SLAI code blocks in adjacent periods.

In an example, the SLAI code block is periodically sent. For example, one SLAI code block may be sent every 30000 idle code blocks, or 100 SLAI code blocks may be sent every 30000 idle code blocks. Alternatively, the SLAI code block is periodically sent. For example, when a fault is detected in a PHY, 50 SLAI code blocks are sent first, then the SLAI code block is periodically sent, and an IIDLE code block is sent between such SLAI code blocks in adjacent periods.

FIG. 12 is a schematic diagram of an idle code block according to an implementation of the present disclosure. Idle code block: a type of 64/66-bit block, where a synchronization header field is 10, a first control block byte is 0x1E, and subsequent eight consecutive seven bits (56 bits in total) are all 0x00.

Herein, the fault indication code block includes a control type field and a fault identification field which is used to indicate that a PHY fault occurs. Optionally, the fault indication code block may further include a fault type identification field, the fault type identification field is used to indicate a fault type of a fault occurring in the at least one PHY, and the fault type includes: the PHY loses a signal, the PHY cannot lock a code block, the PHY cannot lock an alignment code block, and a high-bit error rate alarm is detected in the PHY. In addition, the fault type is not limited to the foregoing content. For example, the fault type may alternatively be any one of the following detected in the PHY: an alarm indicating that a PCS is in a fault state (PCS_status=FALSE); a PHY (OIF FlexE 1.0)/instance (OIF FlexE 2.0) loses FlexE group frame lock or multiframe lock; PHY (OIF FlexE 1.0)/instance (OIF FlexE 2.0) mapping tables, PHY (1.0)/instance (2.0) numbers, or FlexE group numbers carried during frame lock or multiframe lock are inconsistent; or a receive clock skew between a plurality of PHYs (OIF FlexE 1.0)/instances (OIF FlexE 2.0) in a FlexE group is excessively large and exceeds a range allowed by a chip. These are not listed one by one herein.

Optionally, the fault indication code block may be an SLAI code block. The SLAI code block is defined based on any reserved field specified in an IEEE 802.3 standard specification for a standard Ethernet. Specifically, FIG. 13 to FIG. 15 in the following show examples of an SLAI code block.

FIG. 13 is a schematic diagram of an example of an SLAI code block according to an implementation of the present disclosure. As shown in FIG. 13, the SLAI code block uses a control code block, where a control type of the control code block is 0x4B, an O code is 0, D3 is 0 or any value between 3 and 255, and others are 0.

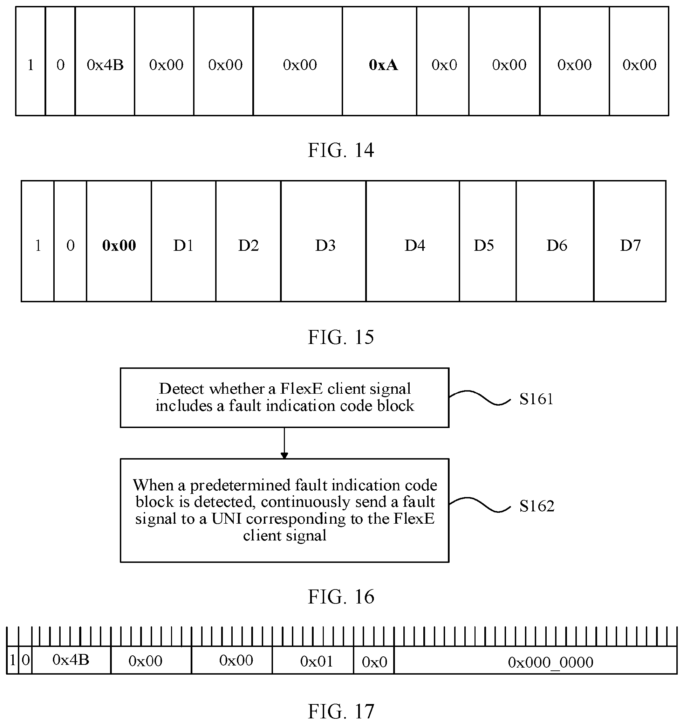

FIG. 14 is a schematic diagram of another example of an SLAI code block according to an implementation of the present disclosure. As shown in FIG. 14, the SLAI code block uses a control code block, where a control type of the control code block is 0x4B, an O code is a value that has not been standardized in a current IEEE 802.3 standard specification, for example, 10.

FIG. 15 is a schematic diagram of still another example of an SLAI code block according to an implementation of the present disclosure. As shown in FIG. 15, the SLAI code block uses a control code block, where a control type of the control code block is 0x00, and each of D1 to D7 takes any value.

When a PHY fault occurs, S111 may be performed to detect whether a fault in at least one PHY included in a FlexE group disappears. If the PHY fault in the does not disappear, perform S112 continues to be performed.

When the fault in the at least one PHY disappears, a fault indication code block is stopped from being sent to a FlexE client corresponding to the at least one PHY in which the fault occurs.

Herein, when the fault in the PHY disappears, the SLAI code block is stopped from being periodically sent to the corresponding FlexE client, to notify a downstream device that the fault in the PHY disappears.

FIG. 16 is a flowchart of another method for indicating a fault in FlexE according to an implementation of the present disclosure. The method specifically includes the following steps.

S161. Detect whether a FlexE client signal includes a fault indication code block.

In the FlexE network, a PE node located downstream detects a fault indication code block on a UNI side interface of the PE node. In a specific example, in the FlexE network, a dSLAI of the PE node located downstream detects an SLAI code block on the UNI side interface of the PE node.

S162. When a predetermined fault indication code block is detected, continuously send a fault signal to a UNI corresponding to the FlexE client signal.

Herein, the fault signal is a signal used to notify a UNI side user outside the FlexE network that a fault occurs in the FlexE. When the UNI is a standard Ethernet interface, an LF signal is sent to the UNI according to an IEEE 802.3 standard specification. When the UNI is an SDH interface, an MS-AIS (multiplex section-alarm indication signal, multiplex section alarm indication signal) signal is sent to the UNI according to an ITU-T G.707 specification. When the UNI is an OTN interface, an ODU-AIS (optical data unit-alarm indication signal, optical data unit-alarm indication signal) signal is sent to the UNI according to an ITU-T G.709 specification. When the UNI is a CPRI, and a CPRI synchronization control word is sent to a UNI side according to a CPRI standard, the CPRI synchronization control word is replaced with an invalid character, for example, K28.5 is replaced with 0 (where interfaces are CPRIs 1 to 7), or /S/ is replaced with 0 (where interfaces are CPRIs 7A, and 8 to 10), to trigger a downstream CPRI client to generate an LOF (loss of frame, loss of frame) alarm. Alternatively, the downstream CPRI client is triggered to generate another alarm in another manner. There are also similar alarms for other user network interfaces, which are not listed herein one by one. The following uses a standard Ethernet interface as an example for description.

If detecting a predetermined fault indication code block, the dSLAI terminates the fault indication code block, and continuously sends an LF signal to a corresponding UNI. The fault indication code block is the same as that described above, and details are not described herein again. A format of the LF signal is shown in FIG. 17.

That a predetermined fault indication code block is detected means: one fault indication code block is detected, fault indication code blocks whose quantity is greater than a preset threshold are detected in a predetermined quantity of received code blocks, or fault indication code blocks whose quantity is greater than a preset threshold are detected within a predetermined time. In an example, if one SLAI code block is detected in a process of receiving the FlexE client signal, it is determined that the predetermined SLAI code block is detected. Alternatively, if 30000 code blocks are consecutively received, five SLAI code blocks are detected, and a preset threshold is equal to 3, it is determined that the predetermined SLAI code block is detected. In another example, within a predetermined time, if five SLAI code blocks are detected, and a preset threshold is equal to 3, it is determined that the predetermined SLAI code block is detected.

After the predetermined fault indication code block is detected, the dSLAI of the PE node in the FlexE network continuously detects the SLAI code block on the UNI side interface of the PE node. If no SLAI code block is detected any more, the dSLAI stops sending the LF signal to the UNI. Furthermore, exchange functions of a FlexE client and a UNI side user client may be quickly enabled, to restore data information exchange.

That no SLAI code block is detected any more means: no SLAI code block or SLAI code blocks whose quantity is less than a preset threshold are detected in a predetermined quantity of received code blocks, or no SLAI code block or SLAI code blocks whose quantity is less than a preset threshold are detected within a predetermined time. In an example, after the predetermined SLAI is detected, if 30000 code blocks are consecutively received, and no SLAI code block is detected, it is determined that no SLAI code block is detected anymore; or if two SLAI code blocks are detected and a preset threshold is equal to 3, it is determined that no SLAI code block is detected any more. In another example, after the predetermined SLAI is detected, if no SLAI code block is detected within, for example, 10 SLAI sending periods, it is determined that no SLAI code block is detected anymore; or if two SLAI code blocks are detected within, for example, 10 SLAI sending periods, and a preset threshold is equal to 3, it is determined that no SLAI code block is detected any more.

According to the method, the SLAI code block can be detected, and a capability, of the FlexE, of notifying a node outside the network that a PHY fault occurs in the network is retained.

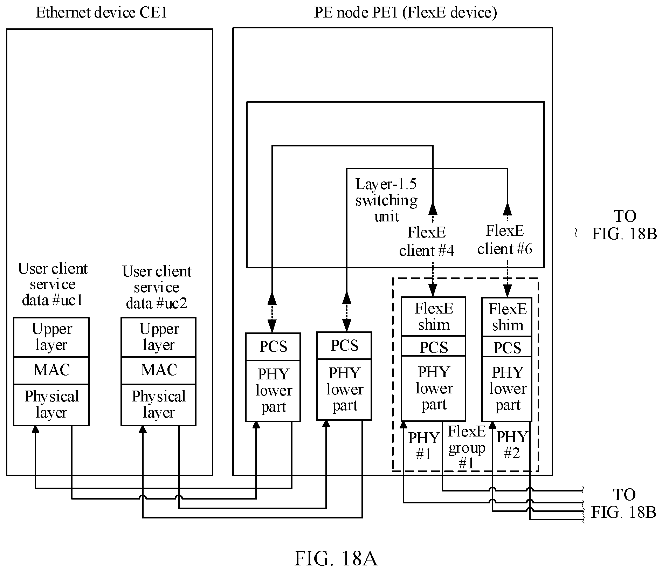

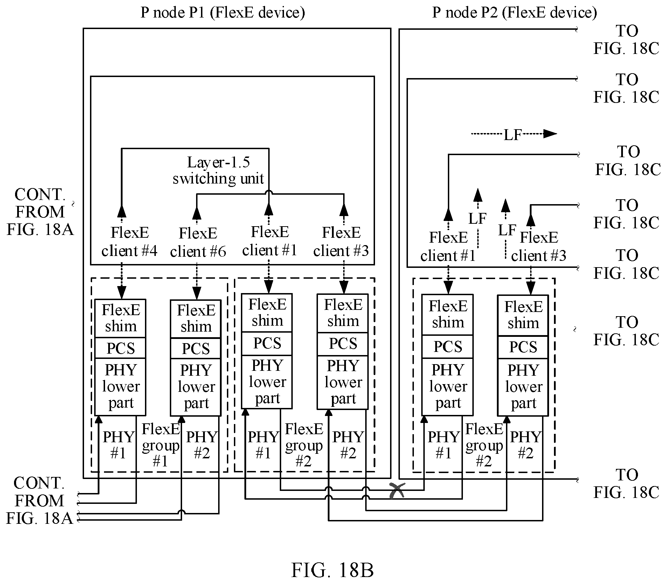

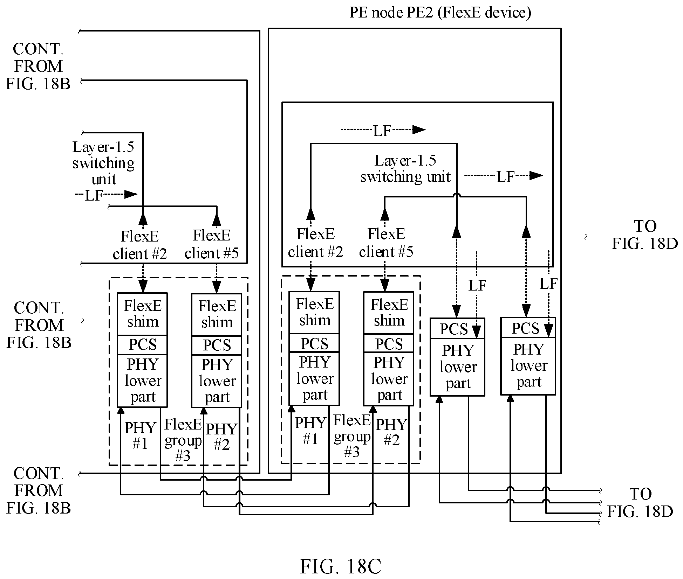

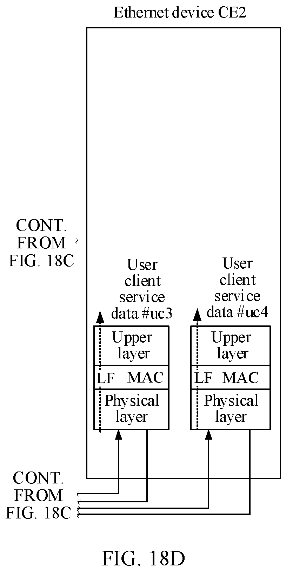

The following describes the technical solutions of the present disclosure in detail with reference to specific implementations. FIG. 18A to FIG. 18D are schematic diagrams of an example showing that a PHY fault occurs according to an implementation of the present disclosure.

As shown in FIG. 18A to FIG. 18D, a PE node PE1, a P node P1, a P node P2, and a PE node PE2 form a FlexE network. Two ends of the FlexE network are connected to an Ethernet device CE1 and an Ethernet device CE2.

The Ethernet device CE1 transmits data with the Ethernet device CE2 by using the PE node PE1, the P node P1, the P node P2, and the PE node PE2.

The Ethernet device CE1 transmits user client service data #uc1 and user client service data #uc2. The user client service data #uc1 and the user client service data #uc2 are sequentially transmitted to the PE node PE1 respectively through an upper layer, a medium access control (medium access control, MAC) layer, and a physical layer.

In the PE node PE1, two paths of data are transmitted to the P node P1 separately through a physical layer lower part (PHY lower part) and a physical coding sublayer (Physical Coding Sublayer, PCS) , through a layer-1.5 switching unit, and through a FlexE shim, a PCS, and a PHY lower part in a FlexE group #1. The layer-1.5 switching unit is layer 1.5, where the layer 1.5 is a data transmission layer related to a FlexE protocol, and is located between a physical layer and a MAC layer in an open system interconnection (open system interconnection, OSI) seven-layer model.

In the P node P1, the two paths of data are transmitted to the P node P2 separately through a PHY lower part, a PCS, and a FlexE shim in a FlexE group #1, through a layer-1.5 switching unit, and through a FlexE shim, a PCS, and a PHY lower part in a FlexE group #2.

In the P node P2, the two paths of data are transmitted to the PE node PE2 separately through a PHY lower part, a PCS, and a FlexE shim in a FlexE group #2, through a layer-1.5 switching unit, and through a FlexE shim, a PCS, and a PHY lower part in a FlexE group #3.

In the PE node PE2, the two paths of data are transmitted to the Ethernet device CE2 separately through a PHY lower part, a PCS, and a FlexE shim in a FlexE group #3, through the layer-1.5 switching unit, and through a PCS and a PHY lower part.

In the Ethernet device CE2, two paths of data are transmitted separately and sequentially through a PHY, a MAC, and an upper layer, to obtain user client service data #uc3 and user client service data #uc4. Transmission of the user client service data #uc1 corresponds to transmission of the user client service data #uc3. Transmission of the user client service data #uc2 corresponds to transmission of user client service data #uc4.

When a fault occurs in a receive-side physical layer link of a PHY #1 port in the FlexE group #2 of the P node P2, a PHY #1 generates an LOS signal. That is, a fault occurs in the PHY #1, leading to a fault in all links of an entire FlexE group #2.

Based on the OIF FlexE 1.0 specification, the P2 continuously sends an LF signal in a downstream direction of two FlexE clients, namely, a FlexE client #1 and a FlexE client #3, carried on the FlexE group #2, and an LF signal flow is transmitted through downstream paths of a FlexE client #1 channel and a FlexE client #3 channel to the PE node PE2 and a FlexE client #2 and a FlexE client #5 carried on the FlexE group #3 of the P2 device.

FIG. 18A to FIG. 18D show that a fault occurs in a PHY between the FlexE group #2 of the P node P1 and the FlexE group #2 of the P node P2. The following describes the technical solutions of the implementations of the present disclosure by using an example in which the foregoing PHY fault occurs.

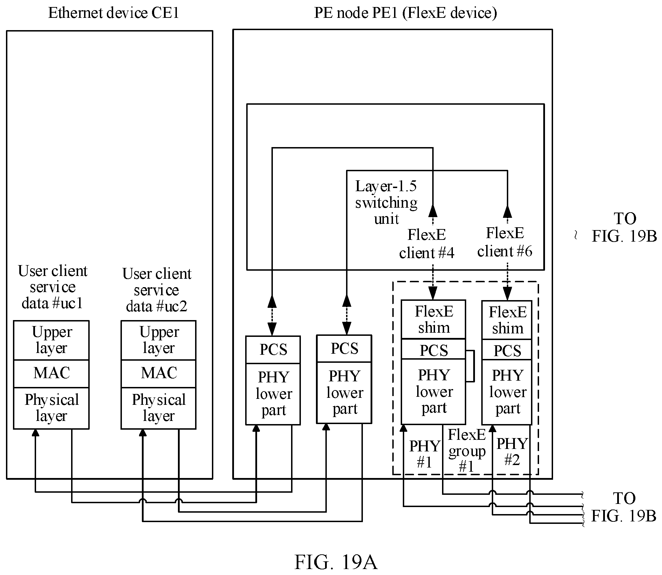

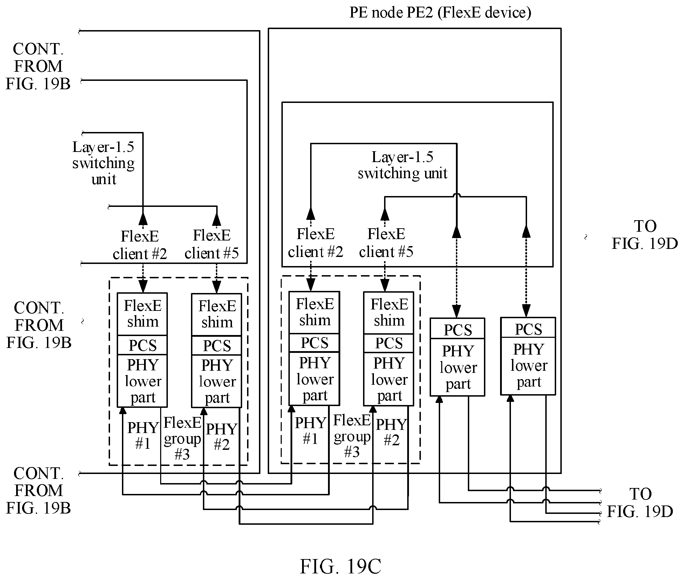

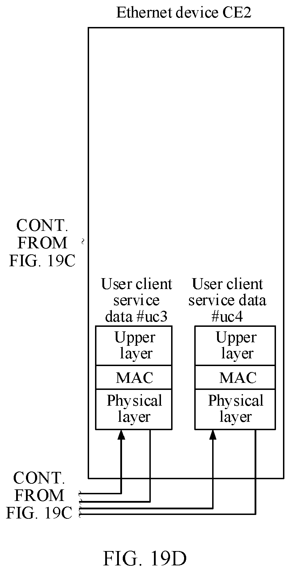

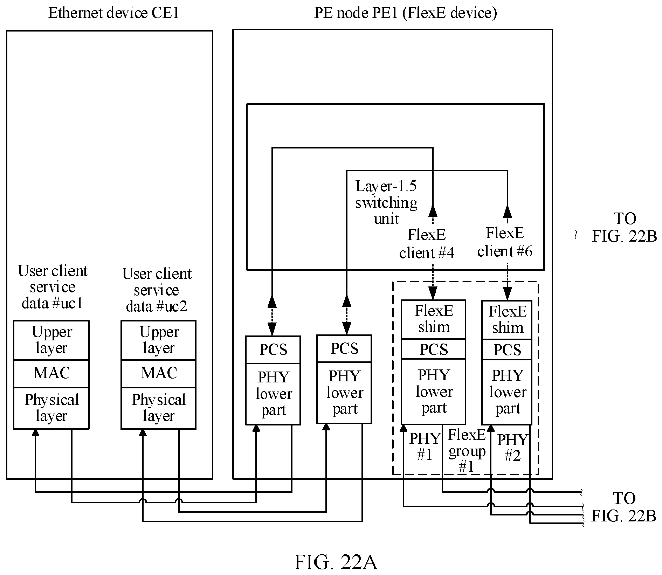

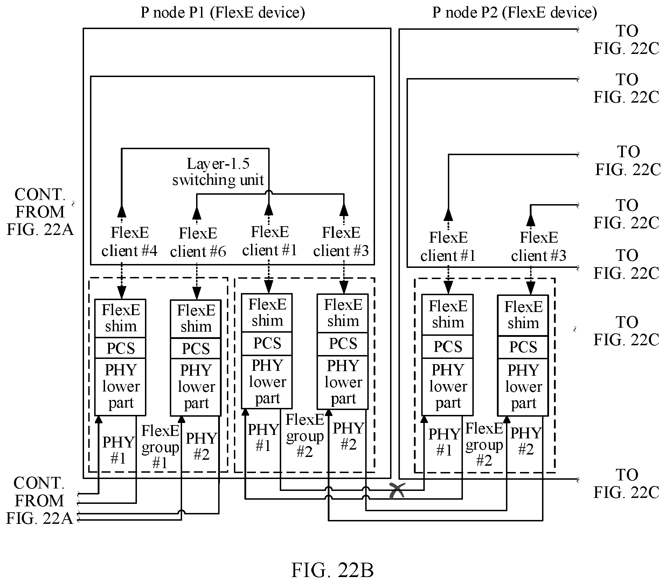

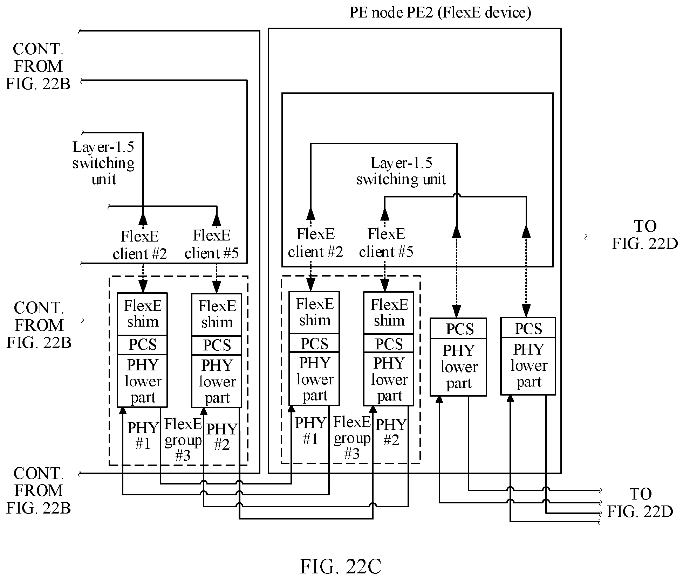

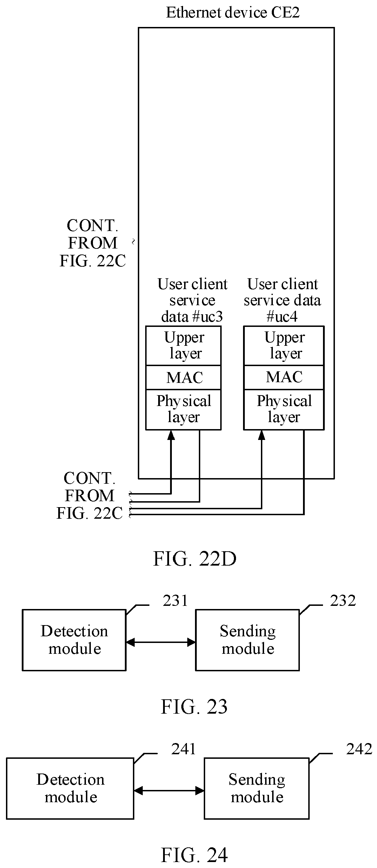

In FIG. 19A to FIG. 22D, a P node performs data exchange from an eastbound FlexE client to a westbound FlexE client, and a PE node performs data exchange between a FlexE client on an NNI side and a UNI side user client. An sSLAI of the P node is used to detect whether a PHY fault occurs. A dSLAI of the PE node is used to detect an SLAI code block, and the dSLAI may be deployed at a FlexE client on an NNI side of the PE node, or may be deployed on a UNI side of the PE node.

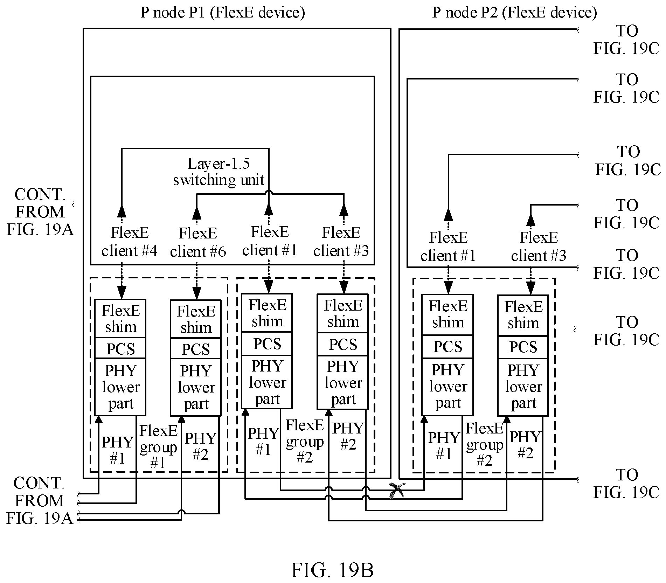

FIG. 19A to FIG. 19D are schematic diagrams of detecting a PHY fault according to an implementation of the present disclosure. In FIG. 19B, when a PHY fault occurs on a link between the FlexE group #2 of the P node P1 and the FlexE group #2 of the P node P2, an LF signal is not continuously sent immediately to a downstream direction of the two FlexE clients (the FlexE client #1 and the FlexE client #3) carried on the FlexE group #2.

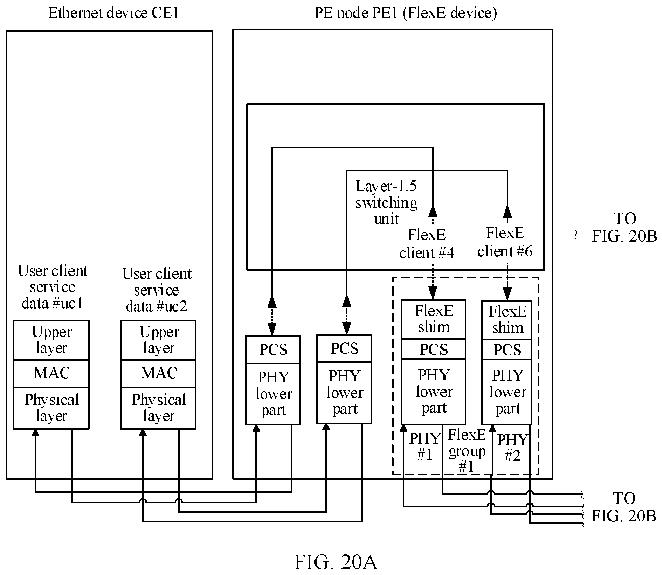

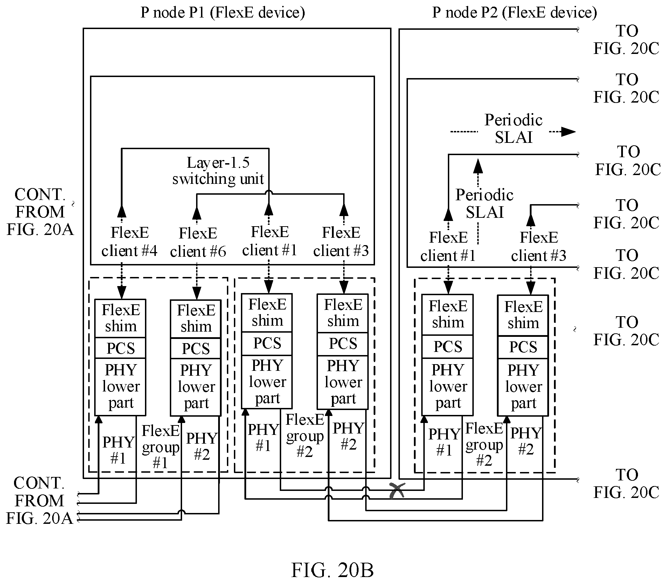

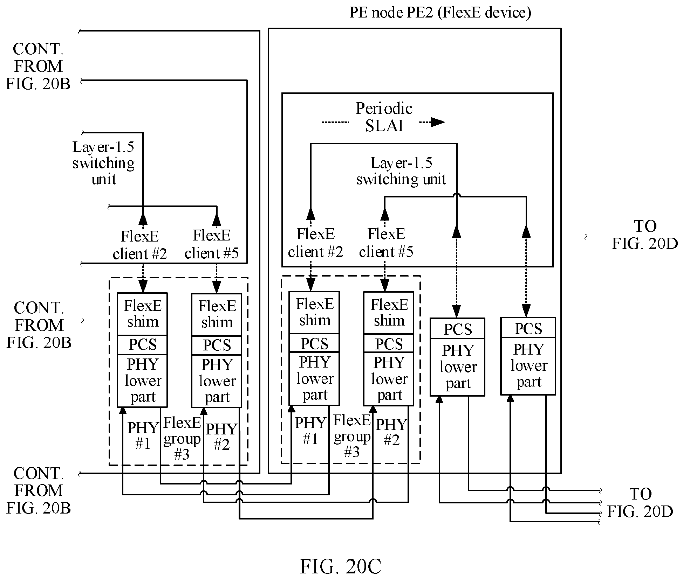

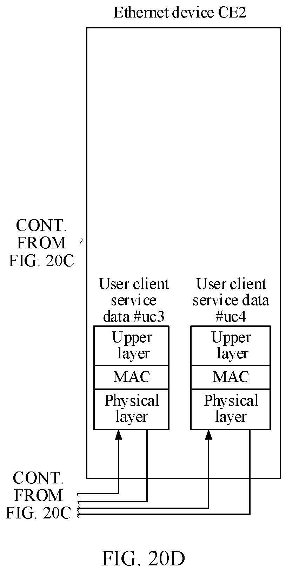

An sSLAI of the P node P2 periodically sends an SLAI code block to the FlexE client #1 carried on the FlexE group. FIG. 20A to FIG. 20D are schematic diagrams of sending an SLAI code block according to an implementation of the present disclosure. In FIG. 20B, the sSLAI of the P node P2 periodically sends an SLAI code block. Optionally, multiple idle code blocks are sent between such SLAI code blocks in two adjacent periods.

In an example, the sSLAI may send two SLAI code blocks in one period, that is, two consecutive SLAI code blocks are sent at an interval of a predetermined time. Multiple idle code blocks are sent between such SLAI code blocks in two adjacent periods. A format of the idle code block is shown in FIG. 12, and the SLAI code block may be any one shown in FIG. 13 to FIG. 15.

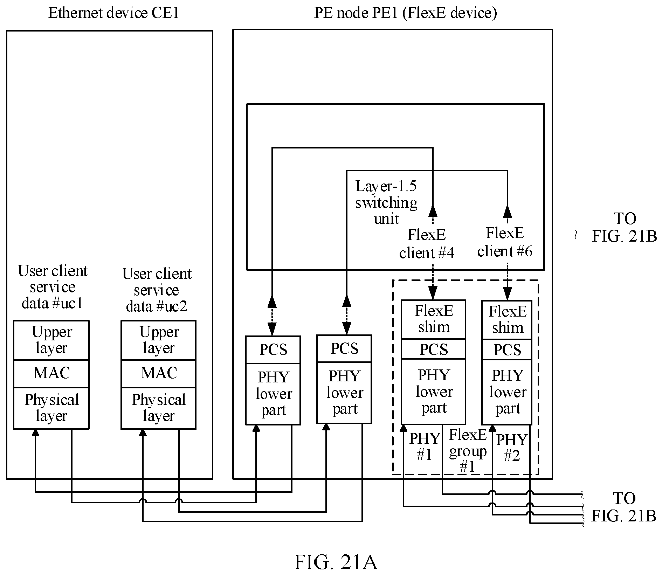

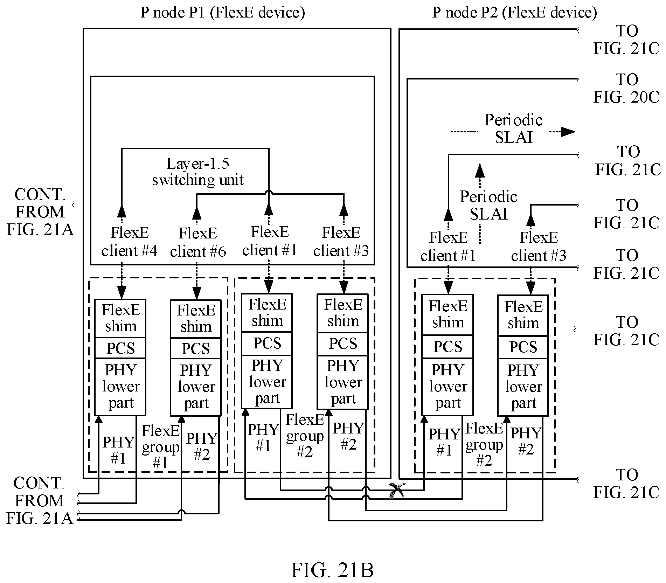

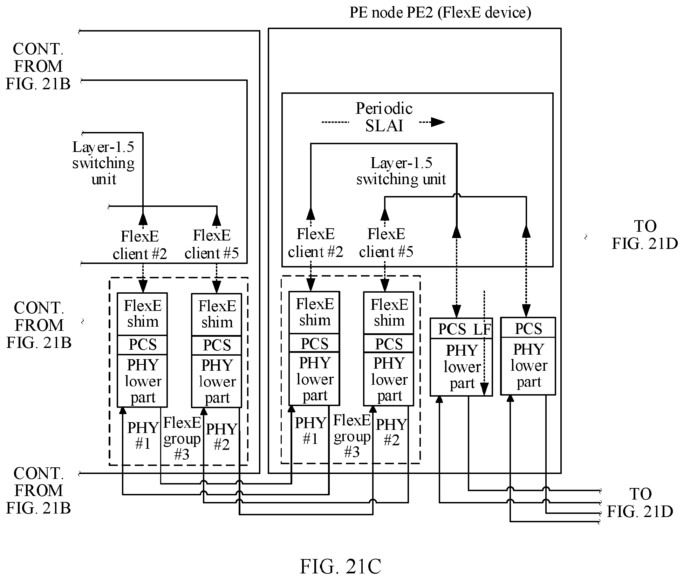

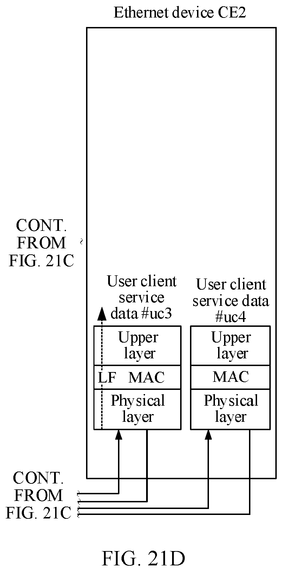

A dSLAI of the PE node PE2 detects a SLAI code block, terminates a predetermined SLAI code block when the SLAI code block is detected, and continuously sends an LF signal to the UNI. FIG. 21A to FIG. 21D are schematic diagrams of sending an LF signal according to an implementation of the present disclosure. A format of the LF signal is shown in FIG. 17.

When detecting the predetermined SLAI code block, the dSLAI terminates the SLAI code block, and continuously sends the LF signal to the corresponding UNI, that is, interrupts the exchange functions of the FlexE client and UNI side user client, that is, interrupts originally exchanged information.

It can be learned that, in this implementation of the present disclosure, an LF signal is not continuously sent to a downstream direction of each FlexE client carried on a FlexE group immediately after a PHY fault is detected in the FlexE group. Instead, an SLAI code block is periodically sent to a FlexE client #2 corresponding to a PHY #1 in which the fault occurs. The dSLAI of the PE node PE2 continuously sends an LF signal to the UNI only after detecting the predetermined SLAI code block. That is, there is a condition for interrupting original exchanged information, and the condition is that the PE node PE2 located downstream detects the predetermined SLAI code block.

When the sSLAI of the P node P2 detects that the PHY fault in the FlexE group #2 disappears, the sSLAI of the P node P2 stops sending the SLAI code block to the FlexE client #2 carried on the FlexE group. FIG. 22A to FIG. 22D are schematic diagrams showing that a PHY fault disappears according to an implementation of the present disclosure.

The PE node PE2 does not detect the SLAI code block, that is, the SLAI code block has disappeared, and stops continuously sending the LF signal to the related UNI. Refer to FIG. 22A to FIG. 22D.

The dSLAI of the PE node PE2 stops sending the LF signal to the UNI, that is, restores the exchange functions of the FlexE client on the NNI side and the UNI side user client, and no longer interferes with exchanged content.

The foregoing describes the method for indicating a fault in the implementations of the present disclosure, and the following describes an apparatus for indicating a fault corresponding to the foregoing method.

FIG. 23 is a schematic structural diagram of an apparatus for indicating a fault according to an implementation of the present disclosure. The apparatus corresponds to a method for indicating a fault.

The apparatus specifically includes a detection module 231 and a sending module 232. It should be noted that, an sSLAI/a dSLAI includes the apparatus in FIG. 23, that is, includes the detection module 231 and the sending module 232.

The detection module 231 is configured to detect whether a fault occurs in at least one PHY included in a FlexE group.

The sending module 232 is configured to: when a fault occurs in the at least one PHY, periodically send a fault indication code block to a FlexE client corresponding to the at least one PHY in which the fault occurs.

In a possible implementation, that the sending module 232 is specifically configured to: when a PHY fault occurs, periodically send a fault indication code block to a FlexE client corresponding to the at least one PHY in which the fault occurs includes: sending multiple idle code blocks between two adjacent fault indication code blocks.

In a possible implementation, the sending module 232 is specifically configured to: when a PHY fault occurs, periodically send a fault indication code block to a FlexE client corresponding to the at least one PHY in which the fault occurs, that is, when the fault is detected, consecutively send a plurality of fault indication code blocks to the FlexE client corresponding to the at least one PHY in which the fault occurs, periodically send the fault indication code block to the FlexE client corresponding to the at least one PHY in which the fault occurs, and send multiple idle code blocks between two adjacent fault indication code blocks.

In a possible implementation, the fault indication code block includes a control type field and a fault identification field which is used to indicate that a fault occurs in a PHY.

In a possible implementation, the fault indication code block further includes a fault type identification field, the fault type identification field is used to indicate a fault type of the fault occurred in the at least one PHY, and the fault type includes: the PHY loses a signal, the PHY cannot lock a code block, the PHY cannot lock an alignment code block, and a high-bit error rate alarm is detected in the PHY.

In a possible implementation, the fault indication code block is an SLAI code block, and the SLAI code block is defined based on any field reserved in an IEEE 802.3 standard specification for a standard Ethernet.

In a possible implementation, the detection module 231 is further configured to detect, when the fault occurs in the PHY, whether the fault in the at least one PHY included in the FlexE group disappears.

The sending module 232 is further configured to: when the fault in the at least one PHY disappears, stop sending the fault indication code block to the FlexE client corresponding to the at least one PHY in which the fault occurs.

FIG. 24 is a schematic structural diagram of an apparatus for indicating a fault according to an implementation of the present disclosure. The apparatus corresponds to a method for indicating a fault.

The apparatus specifically includes a detection module 241 and a sending module 242. It should be noted that a dSLAI includes the apparatus in FIG. 24, that is, includes the detection module 241 and the sending module 242.

For example, in FlexE, a PE node receives a signal from a P node.

The detection module 241 is configured to detect whether a FlexE client signal includes a fault indication code block.

The sending module 242 is configured to: when a predetermined fault indication code block is detected, continuously send a fault signal to a UNI corresponding to the FlexE client signal.

Herein, the fault signal is a signal used to notify a UNI side user outside the FlexE network that a fault occurs in the FlexE network. When the UNI is a standard Ethernet interface, an LF (local fault, local fault) signal is sent to the UNI according to an IEEE 802.3 standard specification. When the UNI is an SDH interface, an MS-AIS (multiplex section-alarm indication signal, multiplex section alarm indication signal) signal is sent to the UNI according to an ITU-T G.707 specification. When the UNI is an OTN interface, an ODU-AIS signal is sent to the UNI according to an ITU-T G.709 specification. When the UNI is a CPRI interface, and a CPRI synchronization control word is sent to the UNI side according to a CPRI standard, the CPRI synchronization control word is replaced with an invalid character, for example, K28.5 is replaced with 0 (where interfaces are CPRIs 1 to 7), or /S/ is replaced with 0 (where interfaces are CPRIs 7A, and 8 to 10), to trigger a downstream CPRI client to generate an LOF (loss of frame, loss of frame) alarm. Alternatively, the downstream CPRI client is. There are also similar alarms for other user network interfaces, which are not listed herein one by one.

In a possible implementation, the detection module 241 is further configured to: after the predetermined fault indication code block is detected, continuously detect the fault indication code block. The sending module 242 is further configured to: when no fault indication code block is detected by the detection module, stop sending the fault signal to the UNI.

According to the foregoing manner of the present disclosure, if detecting the predetermined fault indication code block, the dSLAI terminates the fault indication code block, and continuously sends an LF signal to the corresponding UNI. The fault indication code block is the same as that described above, and details are not described herein again.

In a possible implementation, that a predetermined fault indication code block is detected means that one fault indication code block is detected, fault indication code blocks whose quantity is greater than a preset threshold are detected in a predetermined quantity of received code blocks, or fault indication code blocks whose quantity is greater than a preset threshold are detected within a predetermined time. That no fault indication code block is detected means that no fault indication code block or fault indication code blocks whose quantity is less than the preset threshold are detected in the predetermined quantity of received code blocks, or no fault indication code block or fault indication code blocks whose quantity is less than the preset threshold are detected within the predetermined time.

In a possible implementation, the fault signal is any one of an LF signal, an MS-AIS signal, an ODU-AIS signal, a CPRI invalid synchronization control word signal, or another signal.

In the method, the fault indication code block may be detected, and a capability, of the FlexE, of notifying a node outside the network that a PHY fault occurs in the network is retained.

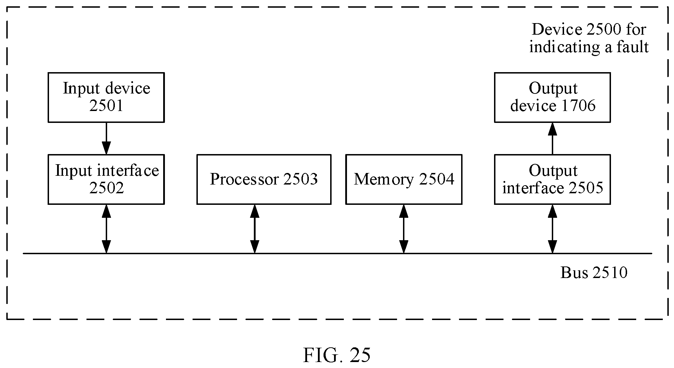

FIG. 25 is a schematic block diagram of a fault indication device according to an implementation of the present disclosure. As shown in FIG. 25, the fault indication device 2500 includes an input device 2501, an input interface 2502, a processor 2503, a memory 2504, an output interface 2505, and an output device 2506.

The input interface 2502, the processor 2503, the memory 2504, and the output interface 2505 are connected to each other by using a bus 2510. The input device 2501 and the output device 2506 are connected to the bus 2510 respectively by using the input interface 2502 and the output interface 2505, and are further connected to another component of the fault indication device 2500.

Specifically, the input device 2501 receives external input information, and transmits the input information to the processor 2503 through the input interface 2502. The processor 2503 processes the input information according to a computer executable instruction stored in the memory 2504, to generate output information, temporarily or permanently stores the output information in the memory 2504, and transmits the output information to the output device 2506 through the output interface 2505. The output device 2506 outputs the output information to the outside of the fault indication device 2500 for use by a user.

The fault indication device 2500 may perform the steps in the implementations of the present disclosure.

The processor 2503 may be one or more central processing units (central processing unit, CPU). When the processor 2503 is one CPU, the CPU may be a single-core CPU or a multi-core CPU.

The memory 2504 may be, but not limited to, one or more of a random access memory (RAM), a read-only memory (ROM), an erasable programmable read-only memory (EPROM), a compact disc read-only memory (CD-ROM), a hard disk, and the like. The memory 2504 is configured to store program code.

It may be understood that, in this implementation of the present disclosure, the fault indication device 2500 in FIG. 25 may be the apparatus in FIG. 23, and the fault indication device 2500 may implement a function of each module in FIG. 23.

In addition, it may be understood that, in this implementation of the present disclosure, the fault indication device 2500 in FIG. 25 may be the apparatus in FIG. 24, and the fault indication device 2500 may implement a function of each module in FIG. 24.

In addition, an implementation of the present disclosure provides a network device, including the apparatuses in FIG. 23 and FIG. 24. The apparatus shown in FIG. 23 may be disposed on a network-to-network interface chip of the device, and the apparatus shown in FIG. 24 may be disposed on a user-network interface chip of the device.

In addition, an implementation of the present disclosure further provides a network device, including the apparatus in FIG. 23. The apparatus shown in FIG. 23 may be disposed on a network-to-network interface chip of the device.

All or some of the foregoing implementations may be implemented by using software, hardware, firmware, or any combination thereof. When all or some of the foregoing implementations are implemented in a form of a computer program product, the computer program product includes one or more computer instructions. When the computer program instructions are loaded or executed on a computer, the procedures or functions according to the implementations of the present disclosure are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), or a semiconductor medium (for example, a solid-state drive (solid state disk, SSD)), or the like.

Each part of this specification is described in a progressive manner, for same or similar parts in the implementations, refer to these implementations, and each implementation focuses on a difference from other implementations. Especially, apparatus and system implementations are basically similar to method implementations, and therefore are described briefly. For related parts, refer to descriptions in the method implementations.

The scope of protection shall be defined by the appended claims.

## Claims

1. A method for indicating a fault in a flexible Ethernet, FlexE, group formed in a flexible Ethernet network, wherein the FlexE group carries a plurality of FlexE clients via a FlexE shim that multiplexes and maps a plurality of FlexE clients to the FlexE group and in addition, the FlexE shim de-maps and de-multiplexes a FlexE group, to restore the plurality of FlexE clients from the FlexE group; wherein the network comprises an apparatus, wherein the apparatus is a provider node, P node, or a provider-edge node, PE node,
wherein the PE node is a network device connected to a user with a user-network interface, UNI, and to the network with a FlexE interface which is a network-to-network interface, NNI, based on the FlexE protocol, wherein the PE node supports a layer-1.5 switching between the UNI interface and the FlexE interface, wherein the layer-1.5 is a data transmission layer related to a FlexE protocol, wherein the FlexE shim is used for mutual conversion from a UNI side data flow to a FlexE slot data flow of a FlexE interface;
wherein the UNI is connected to a UNI side physical layer, PHY, entity, and a detector-server layer alarm indication, dSLAI, function is connected to both the UNI side PHY and the Layer-1.5 internal switching unit of the PE node, wherein a service-server layer alarm indication, sSLAI, function is also connected to the layer-1.5 internal switching unit, wherein the sSLAI function is connected to the FlexE interface sequentially through a flexible Ethernet shim, FlexE shim, function and a PHY corresponding to the FlexE interface;
wherein the P node is a network device equipped with a first FlexE interface which is a NNI based on the FlexE protocol and a second FlexE interface which is an NNI based on the FlexE protocol, wherein the P node supports a layer-1.5 switching between the first FlexE interface and the second FlexE interface, wherein the layer-1.5 is a data transmission layer related to a FlexE protocol, wherein the FlexE shim is used for mutual conversion between the FlexE slot data flows of the first and second FlexE interface,
wherein the first FlexE interface is connected to a first PHY entity which is connected to a first FlexE shim function which is connected to a first sSLAI function which is connected to the layer-1.5 internal switching unit of the P node, which is connected to a second sSLAI function which is connected to a second FlexE shim function, which is connected to a second PHY entity corresponding to the second FlexE interface;
wherein the method comprises:
when the apparatus is the PE node, performing, by the sSLAI function, and when the apparatus is the P node, performing by the first or second sSLAI function the steps of:
detecting (S111), whether a fault occurs in at least one PHY entity comprised in the FlexE group; and
when a fault occurs in the at least one PHY entity, periodically sending (S112) a fault indication code block to a FlexE client corresponding to the at least one PHY entity in which the fault occurs, wherein the FlexE client corresponding to the PHY in which the fault occurs is a FlexE client in a downstream direction of signal transmission by the PHY in which the fault occurs;
the method being **characterized in that** the fault indication code block is a server layer alarm indication, SLAI, code block,
wherein the periodically sending a fault indication code block to a FlexE client corresponding to the at least one PHY entity in which the fault occurs comprises:
sending multiple idle code blocks between such fault indication code blocks in adjacent periods.

2. The method according to claim 1, wherein the fault indication code block comprises a control type field and a fault identification field which is used to indicate that a fault occurs in a physical layer entity.

3. The method according to claim 2, wherein the fault indication code block further comprises a fault type identification field, the fault type identification field is used to indicate a fault type of the fault occurred in the physical layer entity, and the fault type comprises: the physical layer entity loses a signal, the physical layer entity cannot lock a code block, the physical layer entity cannot lock an alignment code block, and a high bit error rate alarm is detected in the physical layer entity.

4. The method according to any one of claims 1 to 3, wherein the apparatus is a PE node and the method further comprises performing, by the dSLAI entity, the steps of:
detecting (S161) whether a flexible Ethernet client signal comprises the fault indication code block; and
when the predetermined fault indication code block is detected, continuously sending (S162) a fault signal to a user-network interface corresponding to the flexible Ethernet client signal.

5. The method according to claim 4, wherein the method further comprising performing, by the dSLAI entity, the steps of:
after the predetermined fault indication code block is detected, continuously detecting the fault indication code block; and
when no fault indication code block is detected, stopping sending the fault signal to the user-network interface.

6. The method according to claim 4 or 5,
wherein that the predetermined fault indication code block is detected means that one fault indication code block is detected, fault indication code blocks whose quantity is greater than a preset threshold are detected in a predetermined quantity of received code blocks, or fault indication code blocks whose quantity is greater than a preset threshold are detected within a predetermined time; and
that no fault indication code block is detected means that no fault indication code block or fault indication code blocks whose quantity is less than the preset threshold are detected in the predetermined quantity of received code blocks, or no fault indication code block or fault indication code blocks whose quantity is less than the preset threshold are detected within the predetermined time.

7. A apparatus for use in a flexible Ethernet network, wherein the apparatus is configured for indicating a fault in a flexible Ethernet, FlexE, group formed in the flexible Ethernet network, wherein the apparatus is a provider node, P node, or a provider-edge node, PE node, wherein the PE node is a network device connected to a user with a user-network interface, UNI, and to the network with a FlexE interface which is a network-to-network interface, NNI, based on the FlexE protocol, wherein the PE node supports a layer-1.5 switching between the UNI interface and the FlexE interface, wherein the layer-1.5 is a data transmission layer related to a FlexE protocol, wherein the FlexE shim is used for mutual conversion from a UNI side data flow to a FlexE slot data flow of a FlexE interface;
wherein the UNI is connected to a UNI side physical layer, PHY, entity, and a detector-server layer alarm indication, dSLAI, function is connected to both the UNI side PHY and the Layer-1.5 internal switching unit of the PE node, wherein a service-server layer alarm indication, sSLAI, function is also connected to the layer-1.5 internal switching unit, wherein the sSLAI function is connected to the FlexE interface sequentially through a flexible Ethernet shim, FlexE shim, function and a PHY corresponding to the FlexE interface;
wherein when the apparatus is the PE node, the sSLAI function, and when the apparatus is the P node, the first or second sSLAI function, is configured for:
detecting (S111), whether a fault occurs in at least one PHY entity comprised in the FlexE group; and
when a fault occurs in the at least one PHY entity, periodically sending (S112) a fault indication code block to a FlexE client corresponding to the at least one PHY entity in which the fault occurs, wherein the FlexE client corresponding to the PHY in which the fault occurs is a FlexE client in a downstream direction of signal transmission by the PHY in which the fault occurs;
**characterized in that** the fault indication code block is a server layer alarm indication, SLAI, code block,
wherein the periodically sending a fault indication code block to a FlexE client corresponding to the at least one PHY entity in which the fault occurs comprises:
sending multiple idle code blocks between such fault indication code blocks in adjacent periods.

8. The apparatus according to claim 7, wherein the fault indication code block comprises a control type field and a fault identification field which is used to indicate that a fault occurs in a physical layer entity.

9. The apparatus according to claim 8, wherein the fault indication code block further comprises a fault type identification field, the fault type identification field is used to indicate a fault type of the fault occurred in the physical layer entity, and the fault type comprises: the physical layer entity loses a signal, the physical layer entity cannot lock a code block, the physical layer entity cannot lock an alignment code block, and a high bit error rate alarm is detected in the physical layer entity.

10. The apparatus according to any one of claims 7 to 9, wherein the apparatus is a PE node and the dSLAI entity is further configured for:
detecting (S161) whether a flexible Ethernet client signal comprises the fault indication code block; and
when the predetermined fault indication code block is detected, continuously sending (S162) a fault signal to a user-network interface corresponding to the flexible Ethernet client signal.

11. The apparatus according to claim 10, wherein the dSLAI entity is further configured for:
after the predetermined fault indication code block is detected, continuously detecting the fault indication code block; and
when no fault indication code block is detected, stopping sending the fault signal to the user-network interface.

12. The apparatus according to claim 10 or 11,
wherein that the predetermined fault indication code block is detected means that one fault indication code block is detected, fault indication code blocks whose quantity is greater than a preset threshold are detected in a predetermined quantity of received code blocks, or fault indication code blocks whose quantity is greater than a preset threshold are detected within a predetermined time; and
that no fault indication code block is detected means that no fault indication code block or fault indication code blocks whose quantity is less than the preset threshold are detected in the predetermined quantity of received code blocks, or no fault indication code block or fault indication code blocks whose quantity is less than the preset threshold are detected within the predetermined time.

13. A computer-readable storage medium, wherein the computer-readable storage medium stores an instruction, and when running on a computer, the instruction enables the computer to perform the method according to any one of claims 1 to 6.

## Patentansprüche

1. Verfahren zum Anzeigen eines Fehlers in einer flexiblen Ethernet-Gruppe, FlexE-Gruppe, die in einem flexiblen Ethernet-Netz gebildet ist, wobei die FlexE-Gruppe eine Vielzahl von FlexE-Clients über einen FlexE-Shim enthält, der eine Vielzahl von FlexE-Clients multiplext und auf der FlexE-Gruppe abbildet und der FlexE-Shim zusätzlich das Abbilden einer FlexE-Gruppe rückgängig macht und diese demultiplext, um die Vielzahl von FlexE-Clients aus der FlexE-Gruppe wiederherzustellen; wobei das Netz eine Vorrichtung umfasst, wobei die Vorrichtung ein Provider-Knoten, P-Knoten, oder ein Provider-Edge-Knoten, PE-Knoten, ist,
wobei der PE-Knoten eine Netzeinrichtung ist, die mit einer Benutzer-Netz-Schnittstelle, UNI, mit einem Benutzer und mit einer FlexE-Schnittstelle, die eine Netz-zu-Netz-Schnittstelle, NNI, basierend auf dem FlexE-Protokoll ist, mit dem Netz verbunden ist, wobei der PE-Knoten Umschalten auf Schicht 1,5 zwischen der UNI-Schnittstelle und der FlexE-Schnittstelle unterstützt, wobei die Schicht 1,5 eine Datenübertragungsschicht ist, die sich auf ein FlexE-Protokoll bezieht, wobei der FlexE-Shim zur gegenseitigen Umwandlung von einem UNI-seitigen Datenfluss in einen FlexE-Schlitzdatenfluss einer FlexE-Schnittstelle verwendet wird;
wobei die UNI mit einer UNI-seitigen physikalischen Schichtentität, PHY-Entität, verbunden ist und eine Detektor-Server-Schicht-Alarmanzeigefunktion, dSLAI-Funktion, mit sowohl der UNI-seitigen PHY als auch der internen Umschalteinheit der Schicht 1,5 des PE-Knotens verbunden ist, wobei eine Service-Server-Schicht-Alarmanzeigefunktion, sSLAI-Funktion, ebenfalls mit der internen Umschalteinheit der Schicht 1,5 verbunden ist, wobei die sSLAI-Funktion sequenziell über eine flexible Ethernet-Shim-Funktion, FlexE-Shim-Funktion, und eine PHY, welche der FlexE-Schnittstelle entspricht, mit der FlexE-Schnittstelle verbunden ist;
wobei der P-Knoten eine Netzeinrichtung ist, die mit einer ersten FlexE-Schnittstelle, die eine NNI basierend auf dem FlexE-Protokoll ist, und einer zweiten FlexE-Schnittstelle, die eine NNI basierend auf dem FlexE-Protokoll ist, ausgestattet ist, wobei der P-Knoten eine Umschaltung der Schicht 1,5 zwischen der ersten FlexE-Schnittstelle und der zweiten FlexE-Schnittstelle unterstützt, wobei die Schicht 1,5 eine Datenübertragungsschicht ist, die sich auf ein FlexE-Protokoll bezieht, wobei der FlexE-Shim zur gegenseitigen Umwandlung zwischen den FlexE-Schlitzdatenflüssen der ersten und der zweiten FlexE-Schnittstelle verwendet wird,
wobei die erste FlexE-Schnittstelle mit einer ersten PHY-Entität verbunden ist, die mit einer ersten FlexE-Shim-Funktion verbunden ist, die mit einer ersten sSLAI-Funktion verbunden ist, die mit der internen Umschalteinheit der Schicht 1,5 des P-Knotens verbunden ist, die mit einer zweiten sSLAI-Funktion verbunden ist, die mit einer zweiten FlexE-Shim-Funktion verbunden ist, die mit einer zweiten PHY-Entität verbunden ist, die der zweiten FlexE-Schnittstelle entspricht;
wobei das Verfahren Folgendes umfasst:
wenn die Vorrichtung der PE-Knoten ist, Durchführen, durch die sSLAI-Funktion, und, wenn die Vorrichtung der P-Knoten ist, Durchführen, durch die erste oder die zweite sSLAI-Funktion, der folgenden Schritte:
Detektieren (S111), ob ein Fehler in mindestens einer PHY-Entität auftritt, die in der FlexE-Gruppe umfasst ist; und
wenn ein Fehler in der mindestens einen PHY-Entität auftritt, periodisches Senden (S112) eines Fehleranzeigecodeblocks an einen FlexE-Client, welcher der mindestens einen PHY-Entität entspricht, in welcher der Fehler auftritt, wobei der FlexE-Client, welcher der PHY entspricht, in welcher der Fehler auftritt, ein FlexE-Client in einer Downstream-Richtung einer Signalübertragung durch die PHY ist, in welcher der Fehler auftritt;
wobei das Verfahren **dadurch gekennzeichnet ist, dass** der Fehleranzeigecodeblock ein Serverschichtalarmanzeigecodeblock, SLAI-Codeblock, ist,
wobei das periodische Senden eines Fehleranzeigecodeblocks an einen FlexE-Client, welcher der mindestens einen PHY-Entität entspricht, in welcher der Fehler auftritt, Folgendes umfasst:
Senden mehrerer Leerlauf-Codeblöcke zwischen solchen Fehleranzeigecodeblöcken in benachbarten Zeiträumen.

2. Verfahren nach Anspruch 1, wobei der Fehleranzeigecodeblock ein Steuerungsartfeld und ein Fehleridentifikationsfeld umfasst, das dazu verwendet wird, anzuzeigen, dass ein Fehler in einer physikalischen Schichtentität auftritt.

3. Verfahren nach Anspruch 2, wobei der Fehleranzeigecodeblock ferner ein Fehlerartidentifikationsfeld umfasst, das Fehlerartidentifikationsfeld dazu verwendet wird, eine Fehlerart des Fehlers anzuzeigen, der in der physikalischen Schichtentität auftrat, und die Fehlerart Folgendes umfasst: die physikalische Schichtentität verliert ein Signal, die physikalische Schichtentität kann einen Codeblock nicht sperren, die physikalische Schichtentität kann einen Ausrichtungscodeblock nicht sperren und ein Alarm wegen hoher Bitfehlerrate wird in der physikalischen Schichtentität detektiert.

4. Verfahren nach einem der Ansprüche 1 bis 3, wobei die Vorrichtung ein PE-Knoten ist und das Verfahren ferner Durchführen, durch die dSLAI-Entität, der folgenden Schritte umfasst:
Detektieren (S161), ob ein flexibles Ethernet-Clientsignal den Fehleranzeigecodeblock umfasst; und
wenn der vorbestimmte Fehleranzeigecodeblock detektiert wird, kontinuierliches Senden (S162) eines Fehlersignals an eine Benutzer-Netz-Schnittstelle, die dem flexiblen Ethernet-Clientsignal entspricht.

5. Verfahren nach Anspruch 4, wobei das Verfahren ferner Durchführen, durch die dSLAI-Entität, der folgenden Schritte umfasst:
nachdem der vorbestimmte Fehleranzeigecodeblock detektiert wurde, kontinuierliches Detektieren des Fehleranzeigecodeblocks; und
wenn kein Fehleranzeigecodeblock detektiert wird, Stoppen des Sendens des Fehlersignals an die Benutzer-Netz-Schnittstelle.

6. Verfahren nach Anspruch 4 oder 5,
wobei, dass der vorbestimmte Fehleranzeigecodeblock detektiert wird, bedeutet, dass ein Fehleranzeigecodeblock detektiert wird, Fehleranzeigecodeblöcke, deren Anzahl größer als ein voreingestellter Schwellenwert ist, in einer vorbestimmten Anzahl empfangener Codeblöcke detektiert werden oder Fehleranzeigecodeblöcke, deren Anzahl größer als ein voreingestellter Schwellenwert ist, innerhalb einer vorbestimmten Zeit detektiert werden; und
dass kein Fehleranzeigecodeblock detektiert wird, bedeutet, dass kein(e) Fehleranzeigecodeblock oder Fehleranzeigecodeblöcke, dessen/deren Anzahl kleiner als der voreingestellte Schwellenwert ist/sind, in der vorbestimmten Anzahl empfangener Codeblöcke detektiert wird/werden oder kein(e) Fehleranzeigecodeblock oder Fehleranzeigecodeblöcke, dessen/deren Anzahl kleiner als der voreingestellte Schwellenwert ist/sind, innerhalb der vorbestimmten Zeit detektiert wird/werden.

7. Vorrichtung zur Verwendung in einem flexiblen Ethernet-Netz, wobei die Vorrichtung zum Anzeigen eines Fehlers in einer flexiblen Ethernet-Gruppe, FlexE-Gruppe, konfiguriert ist, die in dem flexiblen Ethernet-Netz gebildet ist, wobei die Vorrichtung ein Provider-Knoten, P-Knoten, oder ein Provider-Edge-Knoten, PE-Knoten, ist, wobei der PE-Knoten eine Netzeinrichtung ist, die mit einer Benutzer-Netz-Schnittstelle, UNI, mit einem Benutzer und mit einer FlexE-Schnittstelle, die eine Netz-zu-Netz-Schnittstelle, NNI, basierend auf dem FlexE-Protokoll ist, mit dem Netz verbunden ist, wobei der PE-Knoten Umschalten einer Schicht 1,5 zwischen der UNI-Schnittstelle und der FlexE-Schnittstelle unterstützt, wobei die Schicht 1,5 eine Datenübertragungsschicht in Bezug auf ein FlexE-Protokoll ist, wobei der FlexE-Shim zur gegenseitigen Umwandlung von einem UNI-seitigen Datenfluss in einen FlexE-Schlitzdatenfluss einer FlexE-Schnittstelle verwendet wird;
wobei die UNI mit einer UNI-seitigen physikalischen Schichtentität, PHY-Entität, verbunden ist und eine Detektor-Server-Schicht-Alarmanzeigefunktion, dSLAI-Funktion, mit sowohl der UNI-seitigen PHY als auch der internen Umschalteinheit der Schicht 1,5 des PE-Knotens verbunden ist, wobei eine Service-Server-Schicht-Alarmanzeigefunktion, sSLAI-Funktion, ebenfalls mit der internen Umschalteinheit der Schicht 1,5 verbunden ist, wobei die sSLAI-Funktion sequenziell über eine flexible Ethernet-Shim-Funktion, FlexE-Shim-Funktion, und eine PHY, welche der FlexE-Schnittstelle entspricht, mit der FlexE-Schnittstelle verbunden ist;
wobei, wenn die Vorrichtung der PE-Knoten ist, die sSLAI-Funktion und, wenn die Vorrichtung der P-Knoten ist, die erste oder die zweite sSLAI-Funktion zu Folgendem konfiguriert ist:
Detektieren (S111), ob ein Fehler in mindestens einer PHY-Entität auftritt, die in der FlexE-Gruppe umfasst ist; und
wenn ein Fehler in der mindestens einen PHY-Entität auftritt, periodisches Senden (S112) eines Fehleranzeigecodeblocks an einen FlexE-Client, welcher der mindestens einen PHY-Entität entspricht, in welcher der Fehler auftritt, wobei der FlexE-Client, welcher der PHY entspricht, in welcher der Fehler auftritt, ein FlexE-Client in einer Downstream-Richtung einer Signalübertragung durch die PHY ist, in welcher der Fehler auftritt;
**dadurch gekennzeichnet, dass** der Fehleranzeigecodeblock ein Serverschichtalarmanzeigecodeblock, SLAI-Codeblock, ist,
wobei das periodische Senden eines Fehleranzeigecodeblocks an einen FlexE-Client, welcher der mindestens einen PHY-Entität entspricht, in welcher der Fehler auftritt, Folgendes umfasst:
Senden mehrerer Leerlauf-Codeblöcke zwischen solchen Fehleranzeigecodeblöcken in benachbarten Zeiträumen.

8. Vorrichtung nach Anspruch 7, wobei der Fehleranzeigecodeblock ein Steuerungsartfeld und ein Fehleridentifikationsfeld umfasst, das dazu verwendet wird, anzuzeigen, dass ein Fehler in einer physikalischen Schichtentität auftritt.

9. Vorrichtung nach Anspruch 8, wobei der Fehleranzeigecodeblock ferner ein Fehlerartidentifikationsfeld umfasst, das Fehlerartidentifikationsfeld dazu verwendet wird, eine Fehlerart des Fehlers anzuzeigen, der in der physikalischen Schichtentität auftrat, und die Fehlerart Folgendes umfasst: die physikalische Schichtentität verliert ein Signal, die physikalische Schichtentität kann einen Codeblock nicht sperren, die physikalische Schichtentität kann einen Ausrichtungscodeblock nicht sperren und ein Alarm wegen hoher Bitfehlerrate wird in der physikalischen Schichtentität detektiert.

10. Vorrichtung nach einem der Ansprüche 7 bis 9, wobei die Vorrichtung ein PE-Knoten ist und die dSLAI-Entität ferner zu Folgendem konfiguriert ist:
Detektieren (S161), ob ein flexibles Ethernet-Clientsignal den Fehleranzeigecodeblock umfasst; und
wenn der vorbestimmte Fehleranzeigecodeblock detektiert wird, kontinuierliches Senden (S162) eines Fehlersignals an eine Benutzer-Netz-Schnittstelle, die dem flexiblen Ethernet-Clientsignal entspricht.

11. Vorrichtung nach Anspruch 10, wobei die dSLAI-Entität ferner zu Folgendem konfiguriert ist:
nachdem der vorbestimmte Fehleranzeigecodeblock detektiert wurde, kontinuierliches Detektieren des Fehleranzeigecodeblocks; und
wenn kein Fehleranzeigecodeblock detektiert wird, Stoppen des Sendens des Fehlersignals an die Benutzer-Netz-Schnittstelle.

12. Vorrichtung nach Anspruch 10 oder 11,
wobei, dass der vorbestimmte Fehleranzeigecodeblock detektiert wird, bedeutet, dass ein Fehleranzeigecodeblock detektiert wird, Fehleranzeigecodeblöcke, deren Anzahl größer als ein voreingestellter Schwellenwert ist, in einer vorbestimmten Anzahl empfangener Codeblöcke detektiert werden oder Fehleranzeigecodeblöcke, deren Anzahl größer als ein voreingestellter Schwellenwert ist, innerhalb einer vorbestimmten Zeit detektiert werden; und
dass kein Fehleranzeigecodeblock detektiert wird, bedeutet, dass kein(e) Fehleranzeigecodeblock oder Fehleranzeigecodeblöcke, dessen/deren Anzahl kleiner als der voreingestellte Schwellenwert ist/sind, in der vorbestimmten Anzahl empfangener Codeblöcke detektiert wird/werden oder kein(e) Fehleranzeigecodeblock oder Fehleranzeigecodeblöcke, dessen/deren Anzahl kleiner als der voreingestellte Schwellenwert ist/sind, innerhalb der vorbestimmten Zeit detektiert wird/werden.

13. Computerlesbares Speichermedium, wobei das computerlesbare Speichermedium eine Anweisung speichert und die Anweisung, wenn sie auf einem Computer läuft, es dem Computer ermöglicht, das Verfahren nach einem der Ansprüche 1 bis 6 durchzuführen.

## Revendications

1. Procédé d'indication d'une défaillance dans un groupe Ethernet flexible, FlexE, formé dans un réseau Ethernet flexible, dans lequel le groupe FlexE transporte une pluralité de clients FlexE par le biais d'un shim FlexE qui multiplexe et mappe une pluralité de clients FlexE au groupe FlexE et, de plus, le shim FlexE démultiplexe et démappe un groupe FlexE afin de rétablir la pluralité de clients FlexE dans le groupe FlexE ; dans lequel le réseau comprend un appareil, dans lequel l'appareil est un nœud fournisseur, nœud P ou un nœud de périphérie fournisseur, nœud PE,
dans lequel le nœud PE est un dispositif réseau connecté à un utilisateur par le biais d'une interface utilisateur-réseau, UNI, et au réseau par le biais d'une interface FlexE qui est une interface réseau-réseau, NNI, basée sur le protocole FlexE, dans lequel le nœud PE prend en charge une commutation de couche 1.5 entre l'interface UNI et l'interface FlexE, dans lequel la couche 1.5 est une couche de transmission de données liée à un protocole FlexE, dans lequel le shim FlexE est utilisé pour la conversion mutuelle d'un flux de données côté UNI vers un flux de données de créneau FlexE d'une interface FlexE ;
dans lequel l'UNI est connectée à une entité de couche physique côté UNI, PHY, et une fonction d'indication d'alarme de couche serveur de détecteur, dSLAI, est connectée à la fois à la PHY côté UNI et à l'unité de commutation interne de couche 1.5 du nœud PE, dans lequel une fonction d'indication d'alarme de couche serveur de service, sSLAI, est également connectée à l'unité de commutation interne de couche 1.5, dans lequel la fonction sSLAI est connectée à l'interface FlexE séquentiellement par le biais d'une fonction shim Ethernet flexible, shim FlexE, et une PHY correspondant à l'interface FlexE ;
dans lequel le nœud P est un dispositif réseau équipé d'une première interface FlexE, qui est une NNI basée sur le protocole FlexE, et d'une seconde interface FlexE, qui est une NNI basée sur le protocole FlexE, dans lequel le nœud P prend en charge une commutation de couche 1.5 entre la première interface FlexE et la seconde interface FlexE, dans lequel la couche 1.5 est une couche de transmission de données liée à un protocole FlexE, dans lequel le shim FlexE est utilisé pour la conversion mutuelle entre les flux de données de créneau FlexE de la première et de la seconde interface FlexE,
dans lequel la première interface FlexE est connectée à une première entité PHY qui est connectée à une première fonction shim FlexE qui est connectée à une première fonction sSLAI qui est connectée à l'unité de commutation interne de couche 1.5 du nœud P, qui est connectée à une seconde fonction sSLAI qui est connectée à une seconde fonction shimn FlexE, qui est connectée à une seconde entité PHY correspondant à la seconde interface FlexE ;
dans lequel le procédé comprend :
lorsque l'appareil est le nœud PE, la réalisation, par la fonction sSLAI, et lorsque l'appareil est le nœud P, la réalisation par la première ou la seconde fonction sSLAI des étapes suivantes :
le fait de détecter (S111), si une défaillance survient dans au moins une entité PHY comprise dans le groupe FlexE ; et
lorsqu'une défaillance survient dans l'au moins une entité PHY, l'envoi périodique (S112) d'un bloc de code d'indication de défaillance à un client FlexE correspondant à l'au moins une entité PHY dans laquelle la défaillance survient, dans lequel le client FlexE correspondant à la PHY dans laquelle la défaillance survient est un client FlexE dans une direction en aval de la transmission de signal par la PHY dans laquelle la défaillance survient ;
le procédé étant **caractérisé en ce que** le bloc de code d'indication de défaillance est un bloc de code d'indication d'alarme de couche serveur, SLAI,
dans lequel l'envoi périodique d'un bloc de code d'indication de défaillance à un client FlexE correspondant à l'au moins une entité PHY dans laquelle la défaillance survient comprend :
l'envoi de multiples blocs de code inactifs entre ces blocs de code d'indication de défaillance dans des périodes adjacentes.

2. Procédé selon la revendication 1, dans lequel le bloc de code d'indication de défaillance comprend un champ de type de contrôle et un champ d'identification de défaillance qui est utilisé pour indiquer qu'une défaillance survient dans une entité de couche physique.

3. Procédé selon la revendication 2, dans lequel le bloc de code d'indication de défaillance comprend également un champ d'identification de type de défaillance, le champ d'identification de type de défaillance est utilisé pour indiquer le type de défaillance de la défaillance survenue dans l'entité de couche physique, et le type de défaillance comprend : la perte d'un signal par l'entité de couche physique, l'impossibilité pour l'entité de couche physique de verrouiller un bloc de code, l'impossibilité pour l'entité de couche physique de verrouiller un bloc de code d'alignement et la détection d'une alarme de taux d'erreur binaire élevé dans l'entité de couche physique.

4. Procédé selon l'une quelconque des revendications 1 à 3, dans lequel l'appareil est un nœud PE et le procédé comprend également la réalisation, par l'entité dSLAI, des étapes suivantes :
le fait de détecter (S161) si un signal de client Ethernet flexible comprend le bloc de code d'indication de défaillance ; et
lorsque le bloc de code d'indication de défaillance prédéterminé est détecté, l'envoi continu (S162) d'un signal de défaillance à une interface réseau utilisateur correspondant au signal de client Ethernet flexible.

5. Procédé selon la revendication 4, dans lequel le procédé comprend également la réalisation, par l'entité dSLAI, des étapes suivantes :
après la détection du bloc de code d'indication de défaillance prédéterminé, la détection continue du bloc de code d'indication de défaillance ; et
lorsqu'aucun bloc de code d'indication de défaut n'est détecté, l'arrêt de l'envoi du signal de défaillance à l'interface réseau utilisateur.

6. Procédé selon la revendication 4 ou 5,
dans lequel le fait que le bloc de code d'indication de défaillance prédéterminé soit détecté signifie qu'un seul bloc de code d'indication de défaillance est détecté, que des blocs de code d'indication de défaillance dont la quantité est supérieure à un seuil prédéfini sont détectés parmi une quantité prédéterminée de blocs de code reçus, ou que des blocs de code d'indication de défaillance dont la quantité est supérieure à un seuil prédéfini sont détectés dans un délai prédéterminé ; et
le fait qu'aucun bloc de code d'indication de défaillance ne soit détecté signifie qu'aucun bloc de code d'indication de défaillance, ou qu'aucun bloc de code d'indication de défaillance dont la quantité est inférieure au seuil prédéfini, n'est détecté dans la quantité prédéterminée de blocs de code reçus, ou qu'aucun bloc de code d'indication de défaillance, ou qu'aucun bloc de code d'indication de défaillance dont la quantité est inférieure au seuil prédéfini, n'est détecté dans le délai prédéterminé.

7. Appareil pour une utilisation dans un réseau Ethernet flexible, dans lequel l'appareil est configuré pour indiquer une défaillance dans un groupe Ethernet flexible, FlexE, formé dans le réseau Ethernet flexible, dans lequel l'appareil est un nœud fournisseur, nœud P ou un nœud de périphérie fournisseur, nœud PE, dans lequel le nœud PE est un dispositif réseau connecté à un utilisateur par le biais d'une interface utilisateur-réseau, UNI, et au réseau par le biais d'une interface FlexE qui est une interface réseau-réseau, NNI, basée sur le protocole FlexE, dans lequel le nœud PE prend en charge une commutation de couche 1.5 entre l'interface UNI et l'interface FlexE, dans lequel la couche 1.5 est une couche de transmission de données liée à un protocole FlexE, dans lequel le shim FlexE est utilisé pour la conversion mutuelle d'un flux de données côté UNI vers un flux de données de créneau FlexE d'une interface FlexE ;
dans lequel l'UNI est connectée à une entité de couche physique côté UNI, PHY, et une fonction d'indication d'alarme de couche serveur de détecteur, dSLAI, est connectée à la fois à la PHY côté UNI et à l'unité de commutation interne de couche 1.5 du nœud PE, dans lequel une fonction d'indication d'alarme de couche serveur de service, sSLAI, est également connectée à l'unité de commutation interne de couche 1.5, dans lequel la fonction sSLAI est connectée à l'interface FlexE séquentiellement par le biais d'une fonction shim Ethernet flexible, shim FlexE, et une PHY correspondant à l'interface FlexE ;
dans lequel, lorsque l'appareil est le nœud PE, la fonction sSLAI, et lorsque l'appareil est le nœud P, la première ou la seconde fonction sSLAI, est configurée pour :
détecter (S111) si une défaillance survient dans au moins une entité PHY comprise dans le groupe FlexE ; et
lorsqu'une défaillance survient dans l'au moins une entité PHY, envoyer périodiquement (S112) un bloc de code d'indication de défaillance à un client FlexE correspondant à l'au moins une entité PHY dans laquelle la défaillance survient, dans lequel le client FlexE correspondant à la PHY dans laquelle la défaillance survient est un client FlexE dans une direction en aval de la transmission de signal par la PHY dans laquelle la défaillance survient ;
**caractérisé en ce que** le bloc de code d'indication de défaillance est un bloc de code d'indication d'alarme de couche serveur, SLAI,
dans lequel l'envoi périodique d'un bloc de code d'indication de défaillance à un client FlexE correspondant à l'au moins une entité PHY dans laquelle la défaillance survient comprend :
l'envoi de multiples blocs de code inactifs entre ces blocs de code d'indication de défaillance dans des périodes adjacentes.

8. Appareil selon la revendication 7, dans lequel le bloc de code d'indication de défaillance comprend un champ de type de contrôle et un champ d'identification de défaillance qui est utilisé pour indiquer qu'une défaillance survient dans une entité de couche physique.

9. Appareil selon la revendication 8, dans lequel le bloc de code d'indication de défaillance comprend également un champ d'identification de type de défaillance, le champ d'identification de type de défaillance est utilisé pour indiquer le type de défaillance de la défaillance survenue dans l'entité de couche physique, et le type de défaillance comprend : la perte d'un signal par l'entité de couche physique, l'impossibilité pour l'entité de couche physique de verrouiller un bloc de code, l'impossibilité pour l'entité de couche physique de verrouiller un bloc de code d'alignement et la détection d'une alarme de taux d'erreur binaire élevé dans l'entité de couche physique.

10. Appareil selon l'une quelconque des revendications 7 à 9, dans lequel l'appareil est un nœud PE et l'entité dSLAI est également configurée pour :
détecter (S161) si un signal de client Ethernet flexible comprend le bloc de code d'indication de défaillance ; et
lorsque le bloc de code d'indication de défaillance prédéterminé est détecté, envoyer en continu (S162) un signal de défaillance à une interface réseau utilisateur correspondant au signal de client Ethernet flexible.

11. Appareil selon la revendication 10, dans lequel l'entité dSLAI est également configuré pour :
après la détection du bloc de code d'indication de défaillance prédéterminé, détecter en continu le bloc de code d'indication de défaillance ; et
lorsqu'aucun bloc de code d'indication de défaut n'est détecté, arrêter l'envoi du signal de défaillance à l'interface réseau utilisateur.

12. Appareil selon la revendication 10 ou 11,
dans lequel le fait que le bloc de code d'indication de défaillance prédéterminé soit détecté signifie qu'un seul bloc de code d'indication de défaillance est détecté, que des blocs de code d'indication de défaillance dont la quantité est supérieure à un seuil prédéfini sont détectés parmi une quantité prédéterminée de blocs de code reçus, ou que des blocs de code d'indication de défaillance dont la quantité est supérieure à un seuil prédéfini sont détectés dans un délai prédéterminé ; et
le fait qu'aucun bloc de code d'indication de défaillance ne soit déterminé signifie qu'aucun bloc de code d'indication de défaillance, ou qu'aucun bloc de code d'indication de défaillance dont la quantité est inférieure au seuil prédéfini, n'est détecté dans la quantité prédéterminée de blocs de code reçus, ou qu'aucun bloc de code d'indication de défaillance, ou qu'aucun bloc de code d'indication de défaillance dont la quantité est inférieure au seuil prédéfini, n'est détecté dans le délai prédéterminé.

13. Support de stockage lisible par ordinateur, dans lequel le support de stockage lisible par ordinateur stocke une instruction, et lorsque l'instruction est exécutée sur un ordinateur, l'instruction permet à l'ordinateur de réaliser le procédé selon l'une quelconque des revendications 1 à 6.
